# EUROPEAN PATENT SPECIFICATION

(11) **EP 2 806 526 B1**
(45) Date of publication and mention of the grant of the patent: **01.01.2020**
(21) Application number: 12865737.6
(22) Date of filing: 05.11.2012
(51) Int. Cl.: H02J 7/02, H01M 10/48, B60L 53/14, B60L 53/30, B60L 53/31, H02J 7/00, H04L 9/32, B60L 53/60, B60L 53/65, H01M 10/42, B60L 53/68

(54) **UNAUTHORIZED CONNECTION DETECTION DEVICE, UNAUTHORIZED CONNECTION DETECTION SYSTEM AND METHOD FOR DETECTING UNAUTHORIZED CONNECTION**
VORRICHTUNG ZUR ERKENNUNG UNAUTORISIERTER VERBINDUNGEN, SYSTEM ZUR ERKENNUNG UNAUTORISIERTER VERBINDUNGEN UND VERFAHREN ZUR ERKENNUNG UNAUTORISIERTER VERBINDUNGEN
DISPOSITIF DE DÉTECTION DE CONNEXION NON AUTORISÉE, SYSTÈME DE DÉTECTION DE CONNEXION NON AUTORISÉE ET PROCÉDÉ DE DÉTECTION DE CONNEXION NON AUTORISÉE

(30) Priority: 17.01.2012 JP 2012007476
(43) Date of publication of application: 26.11.2014
(73) Proprietor: Panasonic Intellectual Property Management Co., Ltd., Osaka-shi, Osaka 540-6207 (JP)
(72) Inventor: UNAGAMI, Yuji, Osaka 540-6207 (JP); MATSUZAKI, Natsume, Osaka 540-6207 (JP); OHMORI, Motoji, Osaka 540-6207 (JP)
(74) Representative: Vigand, Philippe
(86) International application number: PCT/JP2012/007076
(87) International publication number: WO 2013/108318

(56) References cited:
- WO-A1-2007/041866
- DE-A1-102010 026 689
- GB-A- 2 462 677
- JP-A- 2006 331 815
- JP-A- 2007 305 074
- US-A1- 2010 194 529
- US-A1- 2011 144 844

## Description

### [Technical Field]

The present invention relates to an unauthorized connection detecting device, an unauthorized connection detecting system, and an unauthorized connection detecting method for detecting whether or not a power storage device connectable to a charge/discharge device for charging or discharging with power is an unauthorized power storage device or whether or not the charge/discharge device is an unauthorized charge/discharge device.

### [Background Art]

In recent years, secondary batteries are used for various purposes such as electric vehicles. The secondary batteries are included in a device (hereinafter referred to as power storage device), such as an electric vehicle. The power storage device is connected to a charge/discharge device to be charged or discharged. In relation to the above technique, some conventional techniques have been proposed to prevent a connection to an unauthorized power storage device or an unauthorized charge/discharge device (see Patent Literatures 1 and 2, for example).

### [Citation List]

### [Patent Literature]

[PTL 1]
   Japanese Patent No. 4407753
[PTL 2]
   Japanese Unexamined Patent Application Publication No. 2010-200528

### [Summary of Invention]

### [Technical Problem]

The above conventional techniques have a problem in that the techniques cannot detect such an unauthorized power storage device or an unauthorized charge/discharge device, and thus fail to prevent the connection to the unauthorized power storage device or the unauthorized charge/discharge device. US2011/144844A1 discloses an unauthorized connection device for a single power storage device connected to a charge device. GB2462677 discloses a power supply interruption and a reauthorization method when an attempt occurs to disconnect a power storage device from the charge device while charging.

The present invention provides an unauthorized connection detecting device, an unauthorized connection detecting system, and an unauthorized connection detecting method which are capable of detecting an unauthorized power storage device or an unauthorized charge/discharge device that have a cryptographic module of an authentic product introduced thereinto in an unauthorized manner.

### [Solution to Problem]

An unauthorized connection detecting device according to an aspect of the present invention detects whether or not a power storage device that is connectable to a charge/discharge device for charging or discharging with power is an unauthorized power storage device. The unauthorized connection detecting device includes: a communications unit which receives first charge/discharge information in which first identification information and first connection information are associated each other, the first identification information being information for identifying an encryption key of the power storage device used for mutual authentication between the charge/discharge device and the power storage device connectable to the charge/discharge device, and the first connection information being information on the power storage device and obtained when the power storage device is connected to the charge/discharge device; and an unauthorization detecting unit which detects whether or not the power storage device connected to the charge/discharge device is the unauthorized power storage device, by determining, using the first identification information and the first connection information included in the received first charge/discharge information, whether or not two or more power storage devices associated with a single first identification information item are present.

It is noted that such a general and specific aspect may be implemented in the form of a system, a method, an integrated circuit, a computer program, or a non-transitory computer-readable recording medium such as a CD-ROM, or any combination of systems, methods, integrated circuits, computer programs, or computer-readable recording media.

### [Advantageous Effects of Invention]

The present invention is defined in the appended claims and successfully implements an unauthorized connection detecting device which is capable of detecting an unauthorized power storage device or an unauthorized charge/discharge device that have a cryptographic module of an authentic product introduced thereinto in an unauthorized manner.

### [Brief Description of Drawings]

[Fig. 1]

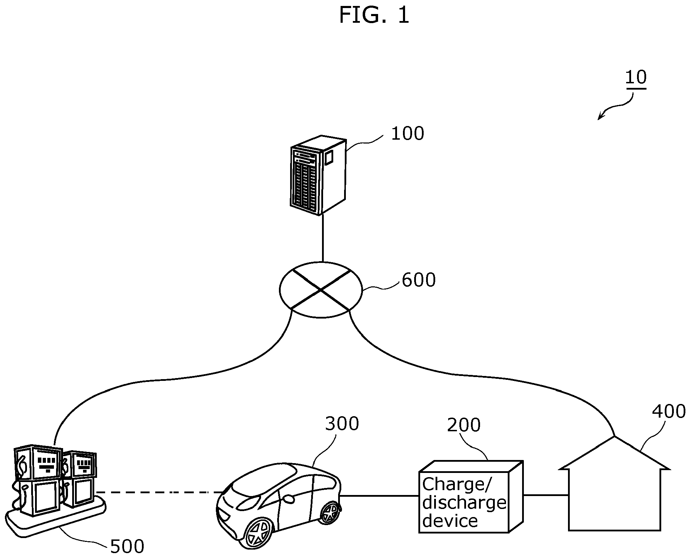

   FIG. 1 shows a structure of an unauthorized connection detecting system including an unauthorized connection detecting device according to an embodiment.
[Fig. 2]

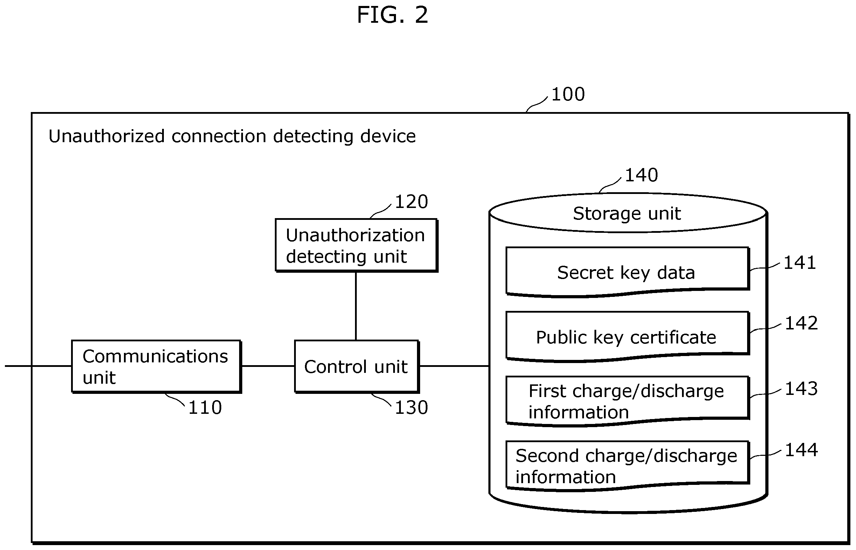

   FIG. 2 depicts a block diagram showing a functional structure of the unauthorized connection detecting device according to the embodiment.
[Fig. 3]

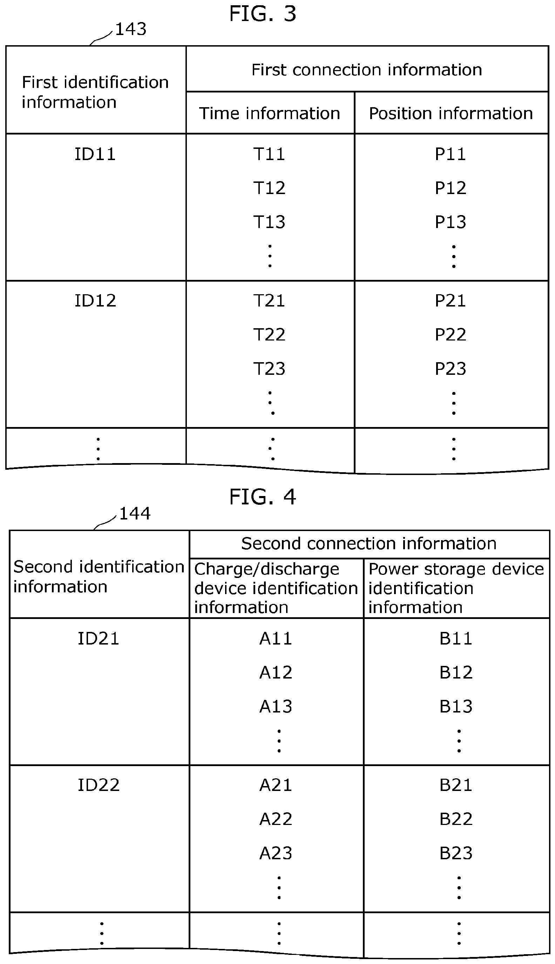

   FIG. 3 exemplifies first charge/discharge information according to the embodiment.
[Fig. 4]
   FIG. 4 exemplifies second charge/discharge information according to the embodiment.
[Fig. 5]

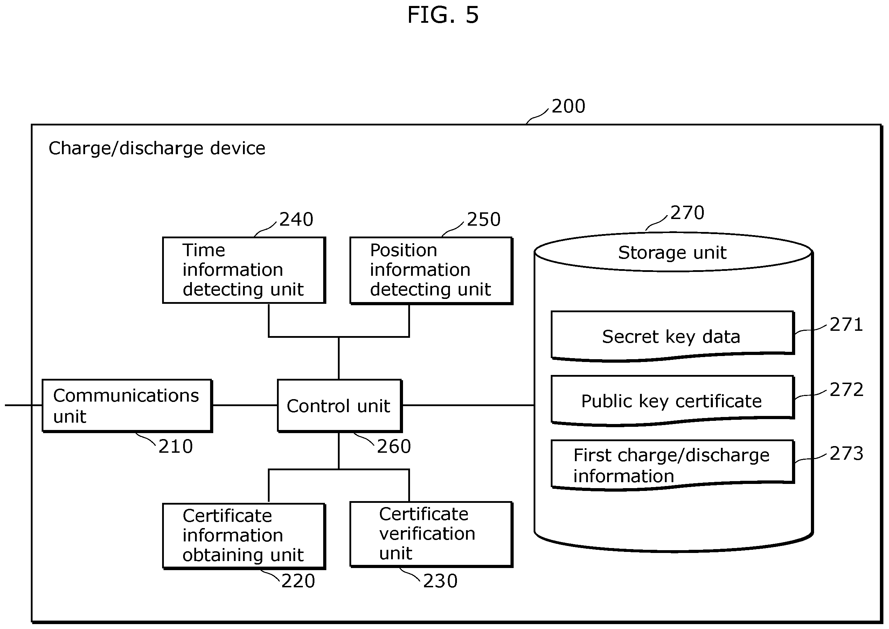

   FIG. 5 depicts a block diagram showing a functional structure of a charge/discharge device according to the embodiment.
[Fig. 6]

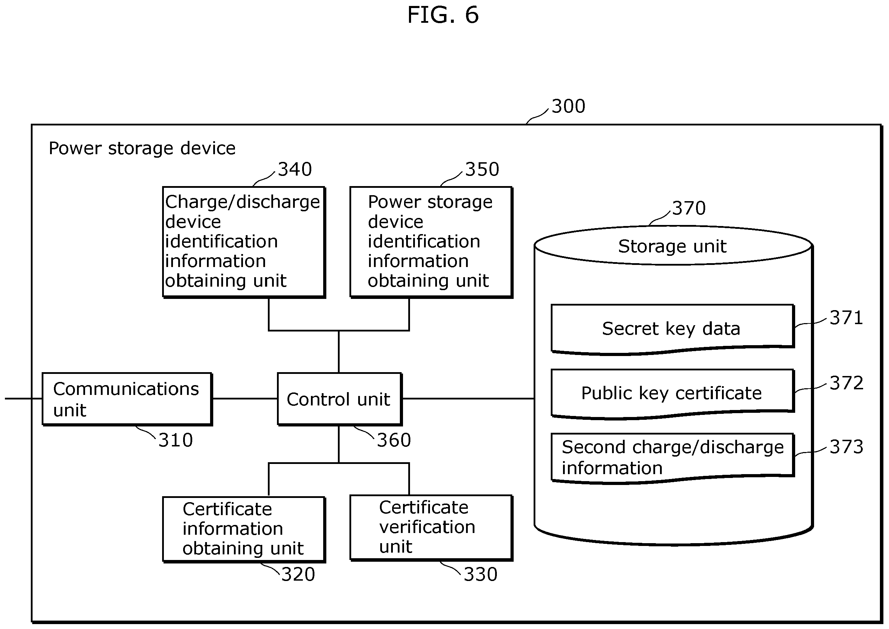

   FIG. 6 depicts a block diagram showing a functional structure of a power storage device according to the embodiment.
[Fig. 7]

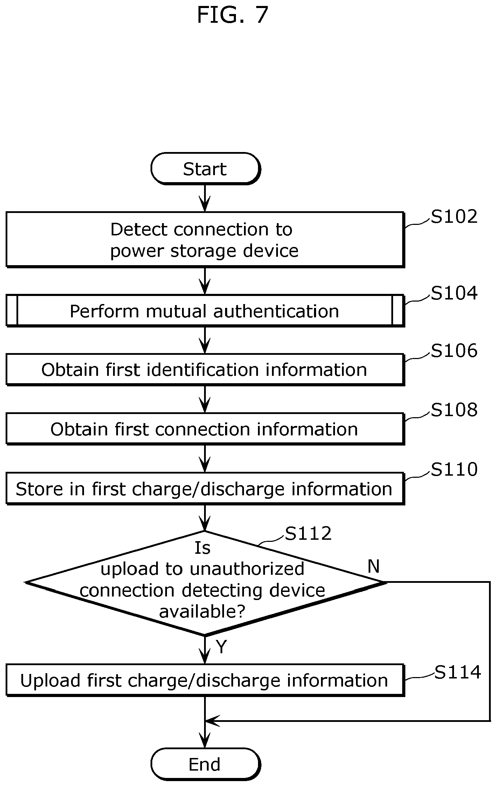

   FIG. 7 depicts a flowchart exemplifying an operation performed by the charge/discharge device according to the embodiment.
[Fig. 8]

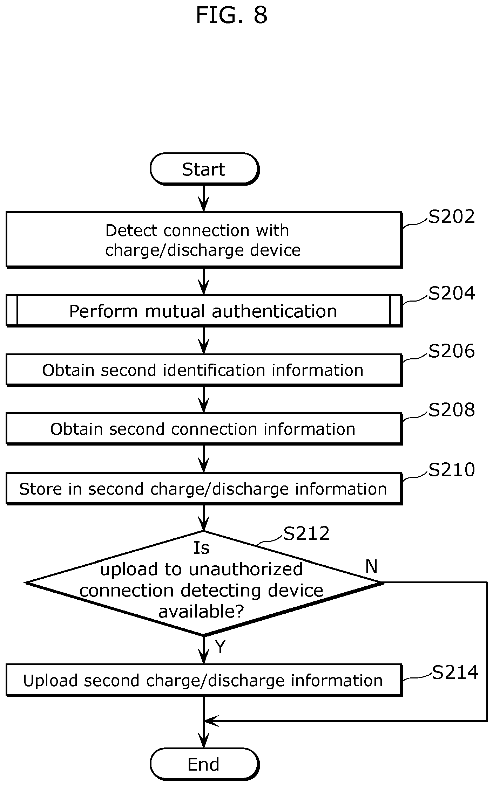

   FIG. 8 depicts a flowchart exemplifying an operation performed by the power storage device according to the embodiment.
[Fig. 9]

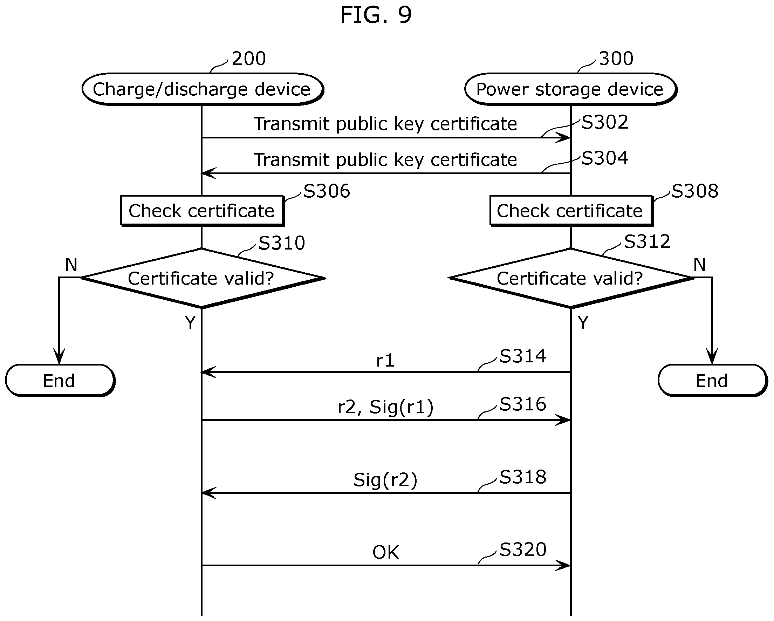

   FIG. 9 depicts a flowchart exemplifying mutual authentication processing performed by the charge/discharge device and the power storage device according to the embodiment.
[Fig. 10]

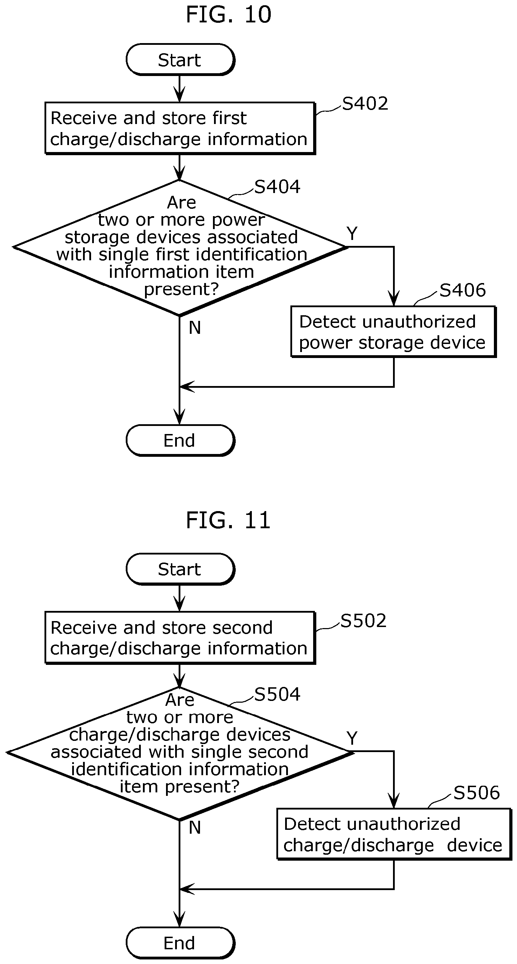

   FIG. 10 depicts a flowchart exemplifying an operation of how the unauthorized connection detecting device according to the embodiment detects an unauthorized power storage device.
[Fig. 11]
   FIG. 11 depicts a flowchart exemplifying an operation of how the unauthorized connection detecting device according to the embodiment detects an unauthorized charge/discharge device.
[Fig. 12]

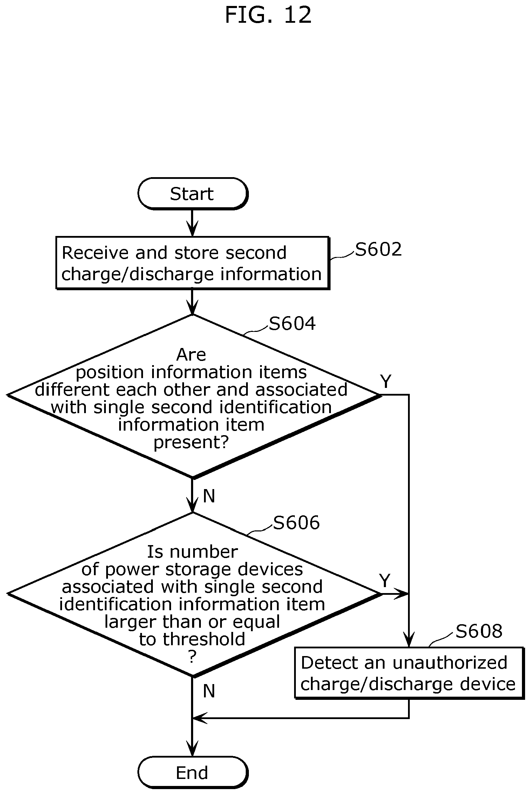

   FIG. 12 depicts a flowchart exemplifying an operation of how the unauthorized connection detecting device according to Modification 1 of the embodiment detects an unauthorized charge/discharge device.
[Fig. 13]

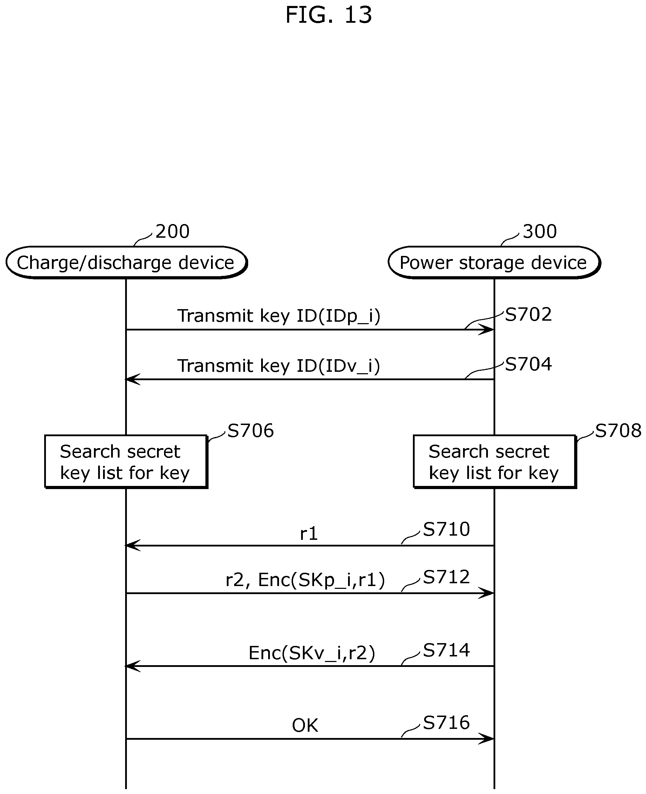

   FIG. 13 depicts a flowchart exemplifying mutual authentication processing performed by the charge/discharge device and the power storage device according to Modification 2 of the embodiment.
[Fig. 14]

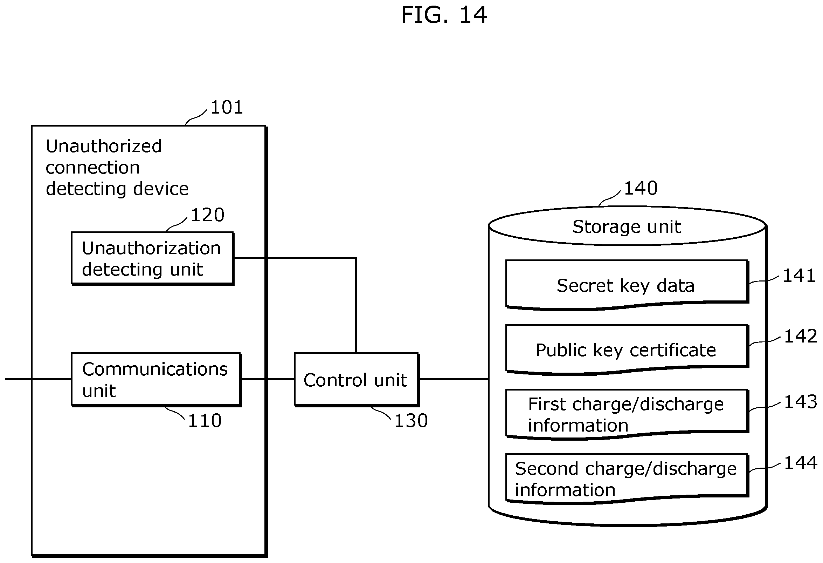

   FIG. 14 depicts a block diagram showing a minimal structure of the unauthorized connection detecting device according to the embodiment and Modifications thereof.

### [Description of Embodiment]

### [Underlying Knowledge Forming Basis of the Present Invention]

In the case where a power storage device or a charge/discharge device is not an authentic one but unauthorized one, such unauthorized devices could have performance problems, burst into flame, and cause electric leakage, and could be misused for theft of electricity. Moreover, when the unauthorized power storage device and the unauthorized charge/discharge device are connected with each other, information may be exchanged therebetween. The exchange could cause the leakage of the information.

In relation to the above problems, some conventional techniques have been proposed to prevent a connection to an unauthorized power storage device or an unauthorized charge/discharge device (see Patent Literatures 1 and 2, for example).In order to prevent an unauthorized connection, the techniques involve mutual authentication between a power storage device and a charge/discharge device to determine whether the charge/discharge device can or cannot charge the power storage device.

However, the inventor has found out that the above conventional techniques have the after-described problem. Specifically, the problem is that the above conventional techniques are unable to detect an unauthorized power storage device or an unauthorized charge/discharge device, and thus might not be able to prevent a connection to the unauthorized power storage device or the unauthorized charge/discharge device.

In other words, when a cloned cryptographic module (a secret key and a public key certificate) of an authentic product is introduced into an unauthentic power storage device or an unauthentic charge/discharge device in an unauthorized manner, the clone allows the unauthentic power storage device or charge/discharge device to receive mutual authentication. As a result, the unauthentic power storage device or charge/discharge device cannot be detected. Hence, the conventional techniques cannot prevent a connection to the unauthentic and unauthentic power storage device or charge/discharge device.

In order to solve the above problems, an unauthorized connection detecting device according to an implementation of the present invention detects whether or not a power storage device that is connectable to a charge/discharge device for charging or discharging with power is an unauthorized power storage device. The unauthorized connection detecting device includes: a communications unit which receives first charge/discharge information in which first identification information and first connection information are associated each other, the first identification information being information for identifying an encryption key of the power storage device used for mutual authentication between the charge/discharge device and the power storage device connectable to the charge/discharge device, and the first connection information being information on the power storage device and obtained when the power storage device is connected to the charge/discharge device; and an unauthorization detecting unit which detects whether or not the power storage device connected to the charge/discharge device is the unauthorized power storage device, by determining, using the first identification information and the first connection information included in the received first charge/discharge information, whether or not two or more power storage devices associated with a single first identification information item are present.

Hence, the unauthorized connection detecting device detects whether or not a power storage device is an unauthorized power storage device by (i) receiving the first charge/discharge information in which the first identification information for identifying a secret key of a power storage device and the first connection information on a power storage device are associated each other, and (ii) determining, based on the first charge/discharge information, whether or not two or more power storage devices associated with a single first identification information are present. Here, on authentic power storage devices, a single first identification information item is assigned to one power storage device. When a cryptographic module of an authentic product is introduced in an unauthorized manner, however, two or more power storage devices associated with a single first identification information item are to be present. Hence, in the case where two or more power storage devices associated with a single first identification information are present, the unauthorized connection detecting device 100 can determine that any one or more of the power storage devices are unauthorized ones. Thus, the unauthorized connection detecting device can detect an unauthorized power storage device having a cryptographic module of an authentic product introduced in an unauthorized manner.

For example, the communications unit may receive the first charge/discharge information in which the first identification information and the first connection information are associated each other, the first connection information including information indicating a time and a position when and where the power storage device was charged or discharged, and the unauthorization detecting unit may detect whether or not the power storage device connected to the charge/discharge device is the unauthorized power storage device, by determining, based on a relationship between times and positions included in a first connection information item associated with a single first identification information item, whether or not two or more power storage devices associated with the single first identification information item are present, the first connection information item being included in the first connection information, and the first connection information item and the single first identification information item being included in the received first charge/discharge information.

Thus, the unauthorized connection detecting device detects whether or not a power storage device is an unauthorized power storage device by determining, based on a relationship between times and positions associated with a single first identification information item, whether or not two or more power storage devices associated with the single first identification information item are present. In other words, in the case where there is an unnatural relationship between times and positions associated with a single first identification information item, the unauthorized connection detecting device determines that two or more power storage devices associated with the single first identification information item are present. For example, in the case where a power storage device cannot possibly travel a distance between two positions within a time period between two times when the two positions and the two times are associated with a single first identification information item, the unauthorized connection detecting device determines that two or more power storage devices associated with the single first identification information item are present. Thus, the unauthorized connection detecting device can detect an unauthorized power storage device having a cryptographic module of an authentic product introduced in an unauthorized manner.

For example, the communications unit may receive the first charge/discharge information in which the first identification information, time information, and position information are associated one another, the time information indicating a time when the charge/discharge device charged or discharged the power storage device, and the position information indicating a position where the charge/discharge device was.

Information on a time included in the first charge/discharge information received by the unauthorized connection detecting device is time information indicating the time at which a charge/discharge device charges or discharges a power storage device. Information on a position is position information such as global positioning system (GPS) information indicating a position of the charge/discharge device. Since the above features allow the unauthorized connection detecting device to receive easily created first charge/discharge information, the unauthorized connection detecting device can easily detect an unauthorized power storage device having a cryptographic module of an authentic product introduced in an unauthorized manner.

An unauthorized connection detecting device according to an implementation of the present invention detects whether or not a charge/discharge device that is connectable with a power storage device and charges or discharges the power storage device is an unauthorized charge/discharge device. The unauthorized connection detecting device may include: a communications unit which receives second charge/discharge information in which second identification information and second connection information are associated each other, the second identification information being information for identifying an encryption key of the charge/discharge device used for mutual authentication between the power storage device and the charge/discharge device connectable with the power storage device, and the second connection information being information on the charge/discharge device and obtained when the charge/discharge device is connected with the power storage device; and an unauthorization detecting unit which detects whether or not the charge/discharge device connected with the power storage device is the unauthorized charge/discharge device, by determining, using the second identification information and the second connection information included in the received second charge/discharge information, whether or not two or more charge/discharge devices associated with a single second identification information item are present.

Thus, the unauthorized connection detecting device detects whether or not a charge/discharge device is an unauthorized charge/discharge device, by (i) receiving the second charge/discharge information in which the second identification information and the second connection information are associated each other, and (ii) determining, using the second charge/discharge information, whether or not two or more charge/discharge devices associated with a single second identification information are present. The second identification information is for identifying the encryption key of the charge/discharge device, and the second connection information is on the charge/discharge device. Here, on authentic charge/discharge devices, a single second identification information item is assigned to one charge/discharge device. When a cryptographic module of an authentic product is introduced in an unauthorized manner, however, two or more charge/discharge devices associated with a single second identification information item are to be present. Hence, in the case where two or more charge/discharge devices associated with a single second identification information are present, the unauthorized connection detecting device 100 can determine that any one or more of the power storage devices are unauthorized ones. Thus, the unauthorized connection detecting device can detect an unauthorized charge/discharge device having a cryptographic module of an authentic product introduced in an unauthorized manner.

For example, the communications unit may receive the second charge/discharge information in which the second identification information and the second connection information are associated each other, the second connection information including charge/discharge device identification information identifying the charge/discharge device, and the unauthorization detecting unit may detect whether or not the charge/discharge device connected with the power storage device is the unauthorized charge/discharge device, by determining whether or not two or more charge/discharge device identification information items, included in a second connection information item associated with a single second identification information item, indicate mutually different charge/discharge devices, thereby determining whether or not two or more charge/discharge devices associated with the single second identification information item are present, the two or more charge/discharge device identification information items being included in the charge/discharge device identification information, the second connection information item being included in the second connection information, and the second connection information item and the single second identification item being included in the received second charge/discharge information.

Thus, the unauthorized connection detecting device detects whether or not a charge/discharge device is an unauthorized charge/discharge device, by determining whether or not two or more charge/discharge device identification information items associated with a single second identification information item indicate mutually different charge/discharge devices, thereby determining whether or not two or more charge/discharge devices associated with the single second identification information item are present. In other words, in the case where two or more charge/discharge device identification information items associated with a single second identification information item indicate different charge/discharge devices, the unauthorized connection detecting device determines that two or more charge/discharge devices associated with the single second identification information item are present. Thus, the unauthorized connection detecting device can detect an unauthorized charge/discharge device having a cryptographic module of an authentic product introduced in an unauthorized manner.

For example, the communications unit may receive the second charge/discharge information in which the second identification information and the second connection information are associated each other, the second connection information including, as the charge/discharge device identification information, position information indicating a position of the charge/discharge device, and the unauthorization detecting unit may detect whether or not the charge/discharge device connected with the power storage device is the unauthorized charge/discharge device, by determining whether or not two or more position information items, included in a second connection information item associated with a single second identification information item, indicate mutually different positions, thereby determining whether or not two or more charge/discharge devices associated with the single second identification information item are present, the two or more position information items being included in the position information, the second connection information item being included in the second connection information, and the second connection information item and the single second identification information item being included in the received second charge/discharge information.

Thus, the charge/discharge device identification information included in the second charge/discharge information received by the unauthorized connection detecting device is position information indicating the position of a charge/discharge device. The unauthorized connection detecting device detects whether or not a charge/discharge device is an unauthorized charge/discharge device, by determining whether or not two or more position information items associated with a single second identification information item indicate mutually different positions, thereby determining whether or not two or more charge/discharge devices associated with the single second identification information item are present. The two or more position information items are included in the position information. Here, the charge/discharge device is provided at a predetermined position, and never found at two or more places. Hence, in the case where two or more position information items associated with a single second identification information item indicate different positions each other, the unauthorized connection detecting device determines that two or more charge/discharge devices associated with the single second identification information item are present. Thus, the unauthorized connection detecting device can detect an unauthorized charge/discharge device having a cryptographic module of an authentic product introduced in an unauthorized manner.

For example, the communications unit may receive the second charge/discharge information in which the second identification information and the second connection information are associated each other, the second connection information including direct current information indicating, as the charge/discharge device identification information, a fluctuation of a direct current provided from the charge/discharge device, and the unauthorization detecting unit may detect whether or not the charge/discharge device connected with the power storage device is the unauthorized charge/discharge device, by determining whether or not two or more direct current information items, included in a second connection information item associated with a single second identification information item, indicate mutually different fluctuations, thereby determining whether or not two or more charge/discharge devices associated with the single second identification information item, the two or more direct current information items being included in the direct current information, the second connection information item being included in the second connection information, and the second connection information item and the single second identification information item being included in the received second charge/discharge information.

Thus, the charge/discharge device identification information included in the second charge/discharge information received by the unauthorized connection detecting device may be direct current information indicating a fluctuation of a direct current provided from a charge/discharge device. The unauthorized connection detecting device may detect whether or not a charge/discharge device is an unauthorized charge/discharge device, by determining whether or not two or more direct current information items associated with a single second identification information item indicate mutually different fluctuations, thereby determining whether or not two or more charge/discharge devices associated with the single second identification information item are present. The two or more direct current information items are included in the direct current information. Here, a direct current provided from a charge/discharge device has fluctuation which is unique to the charge/discharge device itself. Through the analysis of the fluctuation using a phase sample of the direct current, the charge/discharge device can be identified. Hence, in the case where two or more direct current information items associated with a single second identification information item indicate different fluctuations each other, the unauthorized connection detecting device determines that two or more charge/discharge devices associated with the single second identification information item are present. Thus, the unauthorized connection detecting device can detect an unauthorized charge/discharge device having a cryptographic module of an authentic product introduced in an unauthorized manner.

For example, the communications unit may receive the second charge/discharge information in which the second identification information and the second connection information are associated each other, the second connection information including the power storage device identification information identifying the power storage device connected to the charge/discharge device, and the unauthorization detecting unit may detect whether or not the charge/discharge device connected with the power storage device is the unauthorized charge/discharge device, by determining whether or not the number of power storage devices, identified by two or more power storage device identification information items included in a second connection information item associated with a single second identification information item, is larger than or equal to a predetermined threshold, thereby determining whether or not two or more charge/discharge devices associated with the single second identification information item are present, the two or more power storage device identification information items being included in the power storage device identification information, the second connection information item being included in the second connection information, and the second connection information item and the single second identification information item being included in the received second charge/discharge information.

Thus, the unauthorized connection detecting device detects whether or not a charge/discharge device is an unauthorized charge/discharge device, by determining whether or not the number of power storage devices, identified by two or more power storage device identification information items associated with a single second identification information item, is larger than or equal to a predetermined threshold, thereby determining whether or not two or more charge/discharge devices associated with the single second identification information item are present. Here, the two or more power storage device identification information items being included in the power storage device identification information. Here, the number of power storage devices to be connected to one charge/discharge device is limited. In the case where the number of the connected power storage devices is larger than or equal to a predetermined threshold, two or more charge/discharge devices associated with a single second identification information item are to be present. In other words, in the case where the number of power storage devices associated with a single second identification information item is larger than or equal to a predetermined threshold, the unauthorized connection detecting device 100 determines that two or more charge/discharge devices associated with the single second identification information item are present. Thus, the unauthorized connection detecting device can detect an unauthorized charge/discharge device having a cryptographic module of an authentic product introduced in an unauthorized manner.

For example, he communications unit may receive information via one of a communications network connected with a charge station for charging the power storage device when the power storage device is connected and a communications network connected to the charge/discharge device.

Thus, the unauthorized connection detecting device receives information via the communications network connected either with the charging station or a charge/discharge device. In other words, when a power storage device is either charged at the charging station or one of charged and discharged by a charge/discharge device, the unauthorized connection detecting device can easily receive the information. Thus, the unauthorized connection detecting device can easily obtain information and detect an unauthorized charge/discharge device having a cryptographic module of an authentic product introduced in an unauthorized manner.

It is noted that the present invention can be implemented not only as the unauthorized connection detecting device but also as (i) an unauthorized connection detecting system including a charge/discharge device and an unauthorized connection detecting device which detects whether or not a power storage device connectable to the charge/discharge deice is an unauthorized power storage device or (ii) a power storage device and an unauthorized connection detecting device which detects whether or not a charge/discharge device for charging or discharging the power storage device is an unauthorized charge/discharge device.

In addition, the present invention can be implemented in the form of an unauthorized connection detecting method including characteristic processing carried out by the unauthorized connection detecting device or the unauthorized connection detecting system as steps. Moreover, the steps included in the unauthorized connection detecting method may be implemented in the form of a program to be executed by a computer and a computer-readable recording medium in which the program is stored. As a matter of course, the program may be distributed via a recording medium such as a CD-ROM and a transmission medium such as the Internet. In addition, the present invention may be implemented in the form of an integrated circuit having characteristic processing units included in the unauthorized connection detecting device. The present invention may be implemented in the form of any given combinations of the device, the method, the integrated circuit, the computer program, and the recording medium.

Described hereinafter is an embodiment with reference to the drawings. It is noted that the embodiment below shows general or specific, examples. The numerical values, shapes, materials, constituent elements, arrangement positions and connecting schemes of the constituent elements, steps, and an order of steps all described in the embodiment are mere examples, and shall not limit the scope of the present invention. Among the constituent elements in the embodiment, constituent elements not recited in any one of the independent claims are described as arbitrary constituent elements,

FIG. 1 shows a structure of an unauthorized connection detecting system 10 including an unauthorized connection detecting device 100 according to the embodiment.

As shown in FIG. 1, the unauthorized connection detecting system 10 includes the unauthorized connection detecting device 100, a charge/discharge device 200, a power storage device 300, and a charging station 500.

The unauthorized connection detecting device 100 detects one of (i) whether or not a power storage device connectable to the charge/discharge device 200 is an unauthorized power storage device and (ii) whether or not a charge/discharge device connected to the power storage device 300 is an unauthorized charge/discharge device. It is noted that the unauthorized connection detecting device 100 may be either a general-purpose computer or a computer especially for detecting the unauthorized charge/discharge device or the unauthorized power storage device. The unauthorized connection detecting device 100 shall be detailed later.

The charge/discharge device 200 is connected with a power storage device, such as the power storage device 300, and charges or discharges the power storage device with power. Here, the charge/discharge device 200 is an authentic one and could be connected with an unauthorized power storage device. Furthermore, the charge/discharge device 200 is connected to a distribution board in a house 400, and supplies power to a load for use in the house 400 and receives power from the house 400.

In addition, the charge/discharge device 200 is connected to the unauthorized connection detecting device 100 via the house 400 and a communications network 600. The charge/discharge device 200 can transmit the information held in itself to the unauthorized connection detecting device 100. The charge/discharge device 200 shall be detailed later.

The power storage device 300 is connected to a charge/discharge device, such as the charge/discharge device 200. The power storage device 300 receives power from and discharges power to the charge/discharge device 200. Here, the power storage device 300 is an authentic one and could be connected to an unauthorized charge/discharge device. In the embodiment, the power storage device 300 is an electric vehicle including a secondary battery such as a lithium-ion secondary battery; however, the power storage device 300 shall not be limited to an electric vehicle.

When connected to the charging station 500, the power storage device 300 can be charged by the charging station 500 with power. Here, when connected to the charging station 500, the power storage device 300 is connected to the unauthorized connection detecting device 100 via the charging station 500 and the communications network 600. Then, the power storage device 300 can transmit the information held in itself to the unauthorized connection detecting device 100. The power storage device 300 shall be detailed later.

The charging station 500 is a facility to charge a power storage device, such as the power storage device 300, with power. Moreover, following an instruction of the unauthorized connection detecting device 100, the charging station 500 transmits the information held in the power storage device 300 to the unauthorized connection detecting device 100.

Described next is a detailed structure of the unauthorized connection detecting device 100.

FIG. 2 depicts a block diagram showing a functional structure of the unauthorized connection detecting device 100 according to the embodiment.

As shown in FIG. 2, the unauthorized connection detecting device 100 includes a communications unit 110, an unauthorization detecting unit 120, a control unit 130, and a storage unit 140. Moreover, the storage unit 140 stores secret key data 141, a public key certificate 142, first charge/discharge information 143, and second charge/discharge information 144.

Through the communications network 600, the communications unit 110 transmits and receives information to and from the charge/discharge device 200 connected to the house 400 or the power storage device 300 connected to the charging station 500. Specifically, the communications unit 110 receives the first charge/discharge information in which first identification information and first connection information are associated each other. In other words, the communications unit 110 receives the later-described first charge/discharge information 273 from the charge/discharge device 200 via the communications network 600 with which the charge/discharge device 200 is connected. Then, the first charge/discharge information 273 received by the communications unit 110 is stored by the control unit 130 in the first charge/discharge information 143 in the storage unit 140.

FIG. 3 exemplifies the first charge/discharge information 143 according to the embodiment.

As shown in FIG. 3, the first charge/discharge information 143 is an information group in which the first identification information and the first connection information are associated each other.

Here, the first identification information is information for identifying an encryption key of a power storage device used for mutual authentication between the charge/discharge device 200 and the power storage device connectable to the charge/discharge device 200. Specifically, in the embodiment, the first identification information is ID information of a public key certificate, so that the ID information is used for identifying the public key certificate of a power storage device connectable to the charge/discharge device 200.

Furthermore, the first connection information is information on a power storage device and obtained when the power storage device is connected to the charge/discharge device 200. Specifically, the first connection information includes information indicating a time and a position when and where the power storage device was charged or discharged. In other words, the communications unit 110 receives the first charge/discharge information 273 in which the first identification information and the first connection information are associated each other. Here, the first connection information includes information indicating a time and a position when and where a power storage device was charged or discharged.

More specifically, the first connection information includes (i) time information indicating a time at which the charge/discharge device 200 charged or discharged the power storage device and (ii) position information indicating where the charge/discharge device 200 was. Here the position information may be, for example, GPS information of the charge/discharge device 200. It is noted that, in the case where address information of the charge/discharge device 200 is previously registered in the unauthorized connection detecting device 100, the position information may be the ID information of the charge/discharge device 200 to identify the charge/discharge device 200.

Hence, the communications unit 110 receives from the charge/discharge device 200 the first charge/discharge information 273 in which the first identification information, the time information, and the position information are associated one another. Here, the time information indicates a time when the charge/discharge device 200 charged or discharged a power storage device, and the position information indicates a position where the charge/discharge device 200 was. Then, the first charge/discharge information 273 is stored by the control unit 130 on the first charge/discharge information 143 in the storage unit 140.

As shown in FIG. 2, the communications unit 110 receives the second charge/discharge information in which second identification information and second connection information are associated each other. Specifically, when the power storage device 300 is connected to the charging station 500, the communications unit 110 receives the after-described second charge/discharge information 373 from the power storage device 300 via the communications network 600. Then, the second charge/discharge information 373 received by the communications unit 110 is stored by the control unit 130 on the second charge/discharge information 144 in the storage unit 140.

FIG. 4 exemplifies the second charge/discharge information 144 according to the embodiment.

As shown in FIG. 4, the second charge/discharge information 144 is an information group in which the second identification information and the second connection information are associated each other.

Here, the second identification information is information for identifying the encryption key of a charge/discharge device used for mutual authentication between the power storage device 300 and the charge/discharge device connectable with the power storage device 300. Specifically, in the embodiment, the second identification information is ID information of a public key certificate, so that the ID information is used for identifying the public key certificate of a charge/discharge device connectable to the power storage device 300.

Furthermore, the second connection information is information on a charge/discharge device and obtained when charge/discharge device is connected with the power storage device 300. Specifically, the second connection information includes charge/discharge device identification information for identifying the charge/discharge device and power storage device identification information for identifying the power storage device 300 connected to the charge/discharge device.

Here, the charge/discharge device identification information is position information, such as GPS information indicating the position of the charge/discharge device. It is noted that the charge/discharge device identification information may be position information, such as GPS information, indicating the position of the power storage device 300 obtained when the power storage device 300 was connected to a charge/discharge device.

Moreover, the charge/discharge device identification information shall not be limited to the above-described position information; instead, the charge/discharge device identification information may be, for example, direct current information which can identify a charge/discharge device. In other words, a direct current provided from a charge/discharge device has fluctuation which is unique to the charge/discharge device itself. Through the analysis of the fluctuation using a phase sample of the direct current, the charge/discharge device identification information can identify a charge/discharge device.

Furthermore, the power storage device identification information is, for example, ID information on a power storage device for identifying the power storage device 300. It is noted that any information may be used as the power storage device identification information as far as the information can identify the power storage device. The information includes ID information of a public key certificate, so that the ID information is used for identifying the public key certificate of the power storage device 300.

Hence, the communications unit 110 receives the second charge/discharge information 373 from the power storage device 300. Here, the second charge/discharge information 373 associates the second identification information with the second connection information that includes (i) the charge/discharge device identification information for identifying a charge/discharge device and (ii) the power storage device identification information for identifying the power storage device 300 connected to the charge/discharge device. Then, the second charge/discharge information 373 received by the communications unit 110 is stored by the control unit 130 on the second charge/discharge information 144 in the storage unit 140.

As shown in FIG. 2, the unauthorization detecting unit 120 detects whether or not a power storage device connected to the charge/discharge device 200 is an unauthorized power storage device by determining, using the first identification information and the first connection information included in the first charge/discharge information received by the communications unit 110, whether or not two or more power storage devices associated with a single first identification information item are present. In other words, the unauthorization detecting unit 120 reads through the control unit 130 the first charge/discharge information 143 stored in the storage unit 140, and performs the above detection.

Specifically, the unauthorization detecting unit 120 detects whether or not a power storage device connected to the charge/discharge device 200 is an unauthorized power storage device, by determining, based on a relationship between times and positions included in a first connection information item associated with a single first identification information item, whether or not two or more power storage devices associated with the single first identification information item are present. Here, the first connection information item is included in the first connection information, and the first connection information item and the single first identification information item are included in the first charge/discharge information.

In addition, the unauthorization detecting unit 120 detects whether or not a charge/discharge device connected with the power storage device 300 is an unauthorized charge/discharge device, by determining, using the second identification information and the second connection information included in the second charge/discharge information received by the communications unit 110, whether or not two or more charge/discharge devices associated with a single second identification information item are present. In other words, the unauthorization detecting unit 120 reads through the control unit 130 the second charge/discharge information 144 stored in the storage unit 140, and performs the above detection.

Specifically, the unauthorization detecting unit 120 detects whether or not the charge/discharge device connected with the power storage device 300 is an unauthorized charge/discharge device, by determining whether or not two or more charge/discharge device identification information items, included in a second connection information item associated with a single second identification information item, indicate mutually different charge/discharge devices, thereby determining whether or not two or more charge/discharge devices associated with the single second identification information item are present. Here, the two or more charge/discharge device identification information items are included in the charge/discharge device identification information, the second connection information item is included in the second connection information, and the second connection information item and the single second identification item are included in the second charge/discharge information.

To be more specific, the unauthorization detecting unit 120 detects whether or not the charge/discharge device connected with the power storage device 300 is an unauthorized charge/discharge device, by determining whether or not two or more position information items, included in a second connection information item associated with a single second identification information item, indicate mutually different positions, thereby determining whether or not two or more charge/discharge devices associated with the single second identification information item are present. Here, the two or more position information items are included in the position information, the second connection information item is included in the second connection information, and the second connection information item and the single second identification information item are included in the single second identification information.

Moreover, the unauthorization detecting unit 120 detects whether or not the charge/discharge device connected with the power storage device 300 is an unauthorized charge/discharge device, by determining whether or not the number of the power storage devices 300, identified by two or more power storage device identification information items included in a second connection information item associated with a single second identification information item, is larger than or equal to a predetermined threshold, thereby determining whether or not two or more charge/discharge devices associated with the single second identification information item are present. Here, the two or more power storage device identification information items are included in the power storage device identification information, the second connection information item is included in the second connection information, and the second connection information item and the single second identification information item are included in the second charge/discharge information

The control unit 130 gives an instruction to and controls the communications unit 110 and the unauthorization detecting unit 120.

For example, the control unit 130 (i) writes, in the first charge/discharge information 143 in the storage unit 140, the first charge/discharge information 273 received by the communications unit 110 from the charge/discharge device 200, and (ii) writes, in the second charge/discharge information 144 in the storage unit 140, the second charge/discharge information 373 received by the communications unit 110 from the power storage device 300.

In addition, the control unit 130 reads the first charge/discharge information 143 or the second charge/discharge information 144 stored in the storage unit 140, and provides the read first charge/discharge information 143 or the second charge/discharge information 144 to the unauthorization detecting unit 120.

Furthermore, the control unit 130 is also capable of creating a list of cryptographic modules of an unauthorized power storage device or an unauthorized charge/discharge device detected by the unauthorization detecting unit 120.

It is noted that the secret key data 141 and the public key certificate 142 stored in the storage unit 140 are used for mutual authentication when the communications unit 110 receives information from the charge/discharge device 200 or the power storage device 300.

Described next is a detailed structure of the charge/discharge device 200.

FIG. 5 depicts a block diagram showing a functional structure of the charge/discharge device 200 according to the embodiment.

As shown in FIG. 5, the charge/discharge device 200 includes a communications unit 210, a certificate information obtaining unit 220, a certificate verification unit 230, a time information detecting unit 240, a position information detecting unit 250, a control unit 260, and a storage unit 270. Moreover, the storage unit 270 stores secret key data 271, a public key certificate 272, and first charge/discharge information 273.

The communications unit 210 transmits and receives information to and from one of the unauthorized connection detecting device 100 and a power storage device. Specifically, the communications unit 210 transmits the first charge/discharge information 273 that is stored in the storage unit 270 to the unauthorized connection detecting device 100 via the house 400 and the communications network 600.

Here, the first charge/discharge information 273 is created when the power storage device is connected to the charge/discharge device 200. Similar to the first charge/discharge information 143 shown in FIG. 3, the first charge/discharge information 273 is an information group in which the first identification information and the first connection information (time information and position information) are associated each other.

The first identification information is ID information of a public key certificate, so that the ID information is used for identifying the public key certificate of the power storage device connected to the charge/discharge device 200. The first identification information is obtained by the certificate information obtaining unit 220 when the power storage device is connected to the charge/discharge device 200. In other words, the certificate information obtaining unit 220 obtains the ID information of the public key certificate from the power storage device via the communications unit 210 when the power storage device is connected to the charge/discharge device 200, and stores the information in the first charge/discharge information 273 in the storage unit 270.

In addition, the time information in the first connection information indicates a time when the charge/discharge device 200 charged or discharged the power storage device. The time information is obtained by the time information detecting unit 240 when the power storage device is connected to the charge/discharge device 200. In other words, the time information detecting unit 240 obtains the time information when the power storage device is connected to the charge/discharge device 200, and stores the information in the first charge/discharge information 273 in the storage unit 270.

Moreover, the position information in the first connection information includes GPS information indicating the position of the charge/discharge device 200. The position information is obtained by the position information detecting unit 250 when the power storage device is connected to the charge/discharge device 200. In other words, the position information detecting unit 250 obtains the position information when the power storage device is connected to the charge/discharge device 200, and stores the information in the first charge/discharge information 273 in the storage unit 270.

It is noted that in the case where address information of the charge/discharge device 200 is previously registered in the unauthorized connection detecting device 100, the position information may be the ID information of the charge/discharge device 200 for identifying the charge/discharge device 200. Here, the ID information of the charge/discharge device 200 is obtained by the position information detecting unit 250 when the power storage device is connected to the charge/discharge device 200.

When a power storage device is connected to the charge/discharge device 200, the certificate verification unit 230 performs mutual authentication between the power storage device and the charge/discharge device 200 using the secret key data 271 and the public key certificate 272 stored in the storage unit 270. A specific description of how the certificate verification unit 230 performs the mutual authentication shall be described later.

The control unit 260 controls the communications unit 210, the certificate information obtaining unit 220, the certificate verification unit 230, the time information detecting unit 240, and the position information detecting unit 250.

Specifically, when a power storage device is connected to the charge/discharge device 200, the control unit 260 causes the certificate information obtaining unit 220 to obtain first identification information, the time information detecting unit 240 to obtain time information, and the position information detecting unit 250 to obtain position information. Then, the control unit 260 stores the obtained information in the first charge/discharge information 273 in the storage unit 270. In addition, the control unit 260 causes the communications unit 210 to read the first charge/discharge information 273 from the storage unit 270 and to transmit the read first charge/discharge information 273 to the unauthorized connection detecting device 100.

Moreover, when a power storage device is connected to the charge/discharge device 200, the control unit 260 causes the certificate verification unit 230 to perform, via the communications unit 210, mutual authentication between the power storage device and the charge/discharge device 200.

Described next is a detailed structure of the power storage device 300.

FIG. 6 depicts a block diagram showing a functional structure of the power storage device 300 according to the embodiment.

As shown in FIG. 6, the power storage device 300 includes a communications unit 310, a certificate information obtaining unit 320, a certificate verification unit 330, a charge/discharge device identification information obtaining unit 340, a power storage device identification information obtaining unit 350, a control unit 360, and a storage unit 370. Moreover, the storage unit 370 stores a secret key data 371, a public key certificate 372, and the second charge/discharge information 373.

The communications unit 310 transmits and receives information to and from one of the unauthorized connection detecting device 100 and a charge/discharge device power storage device. Specifically, the communications unit 310 transmits the second charge/discharge information 373, which is stored in the storage unit 370, to the unauthorized connection detecting device 100 via the charging station 500 and the communications network 600.

Here, the second charge/discharge information 373 is created when the power storage device 300 is connected to the charge/discharge device. Similar to the second charge/discharge information 144 shown in FIG. 4, the second charge/discharge information 373 is a group of information in which the second identification information and the second connection information (the charge/discharge device identification information and the power storage device identification information) are associated each other.

The second identification information is ID information of a public key certificate, so that the ID information is used for identifying the public key certificate of the charge/discharge device connected with the power storage device 300. The first identification information is obtained by the certificate information obtaining unit 320 when the charge/discharge device is connected to the power storage device 300. In other words, the certificate information obtaining unit 320 obtains the ID information of the public key certificate from the charge/discharge device via the communications unit 310 when the charge/discharge device is connected to the power storage device 300, and stores the information in the second charge/discharge information 373 in the storage unit 370.

Moreover, the charge/discharge device identification information in the second connection information is, for example, capable of identifying a charge/discharge device, such as GPS information indicating a position of the charge/discharge device. The charge/discharge device identification information is obtained by the power storage device identification information obtaining unit 350 when the charge/discharge device is connected to the power storage device 300. In other words, the power storage device identification information obtaining unit 350 obtains the charge/discharge device identification information when the charge/discharge device is connected to the power storage device 300, and stores the information in the second charge/discharge information 373 in the storage unit 370.

In addition, the power storage device identification information in the second connection information is, for example, capable of identifying a power storage device 300, such as ID information for identifying the power storage device 300. The power storage device identification information is obtained by the charge/discharge device identification information obtaining unit 340 when the charge/discharge device is connected with the power storage device 300. In other words, the charge/discharge device identification information obtaining unit 340 obtains the charge/discharge device identification information when the charge/discharge device is connected with the power storage device 300, and stores the information in the second charge/discharge information 373 in the storage unit 370.

When a charge/discharge device is connected with the power storage device 300, the certificate verification unit 330 performs mutual authentication between the charge/discharge device and the power storage device 300 using the secret key data 371 and the public key certificate 372 stored in the storage unit 370. A specific description of how the certificate verification unit 330 performs the mutual authentication shall be described later.

The control unit 360 controls the communications unit 310, the certificate information obtaining unit 320, the certificate verification unit 330, the charge/discharge device identification information obtaining unit 340, and the power storage device identification information obtaining unit 350.

Specifically, when a charge/discharge device is connected with the power storage device 300, the control unit 360 causes the certificate information obtaining unit 320 to obtain second identification information, the charge/discharge device identification information obtaining unit 340 to obtain charge/discharge deice identification information, and the power storage device identification information obtaining unit 350 to obtain power storage device identification information. Then, the control unit 360 stores the information in the second charge/discharge information 373 in the storage unit 370. In addition, the control unit 360 causes the communications unit 310 to read the second charge/discharge information 373 from the storage unit 370 and to transmit the read second charge/discharge information 373 to the unauthorized connection detecting device 100.

Moreover, when a charge/discharge device is connected to the power storage device 300, the control unit 360 causes the certificate verification unit 330 to perform, via the communications unit 310, mutual authentication between the charge/discharge device and the power storage device 300.

Described next is processing performed by the charge/discharge device 200.

FIG. 7 depicts a flowchart exemplifying an operation performed by the charge/discharge device 200 according to the embodiment.

As shown in FIG. 7, the communications unit 210 first detects that a power storage device has been connected to the charge/discharge device 200 (S102). Here, the charge/discharge device 200 can be connected not only to an authentic power storage device 300 but also to an unauthorized power storage device.

Hence, the certificate verification unit 230 performs mutual authentication between the power storage device and the charge/discharge device 200, using the secret key data 271 and the public key certificate 272 stored in the storage unit 270 (S104). A specific description of how the certificate verification unit 230 performs the mutual authentication shall be described later.

Then, when the mutual authentication is properly performed, the processing proceeds to the next step. Here, even though the connected power storage device is an unauthorized one, the mutual authentication could be properly performed between the unauthorized power storage device and the charge/discharge device 200, in the case where a cryptographic module of the authentic power storage device 300 is analyzed in an unauthorized manner and the analyzed module is cloned and fraudulently introduced into the unauthorized power storage device.

Then, through the communications unit 210, the certificate information obtaining unit 220 obtains the first identification information from the power storage device connected to the charge/discharge device 200 (S106). Specifically, the certificate information obtaining unit 220 obtains ID information of the public key certificate of the power storage device.

In addition, the time information detecting unit 240 obtains time information and the position information detecting unit 250 obtains position information, so that the charge/discharge device 200 obtains first connection information including the time information and the position information (S108). It is noted that, in the case where address information of the charge/discharge device 200 is previously registered in the unauthorized connection detecting device 100, the position information may be the ID information of the charge/discharge device 200 to identify the charge/discharge device 200. Here, the ID information of the charge/discharge device 200 may be obtained by the position information detecting unit 250 when the power storage device is connected to the charge/discharge device 200.

Then, the control unit 260 stores in the first charge/discharge information 273 in the storage unit 270 the first identification information and the first connection information obtained by the communications unit 210, the certificate information obtaining unit 220, and the time information detecting unit 240 (S110).

Then, the control unit 260 determines whether or not the communications unit 210 can transmit (upload) the first charge/discharge information 273 to the unauthorized connection detecting device 100 (S112). For example, when the charge/discharge device 200 is connected to the unauthorized connection detecting device 100 via the communications network 600, the control unit 260 determines that the communications unit 210 can upload the first charge/discharge information 273 to the unauthorized connection detecting device 100.

Then, in the case where the determination result shows that the communications unit 210 can upload the first charge/discharge information 273 to the unauthorized connection detecting device 100 (S112: Y), the control unit 260 causes the communications unit 210 to read the first charge/discharge information 273 from the storage unit 270, and to transmit the read first charge/discharge information 273 to the unauthorized connection detecting device 100 (S114).

In the case where the determination result shows that the communications unit 210 cannot upload the first charge/discharge information 273 to the unauthorized connection detecting device 100 (S112: N), the control unit 260 finishes processing.

It is noted that the control unit 260 may wait until the communications unit 210 is ready to upload the first charge/discharge information 273 to the unauthorized connection detecting device 100. Upon determining that the communications unit 210 is ready for the upload, the control unit 260 may cause the communications unit 210 to transmit the first charge/discharge information 273 to the unauthorized connection detecting device 100.

Alternatively, the control unit 260 may wait until a predetermined amount of information is accumulated in the first charge/discharge information 273. Then, the control unit 260 may cause the communications unit 210 to transmit the first charge/discharge information 273 to the unauthorized connection detecting device 100.

Hence, the processing performed by the charge/discharge device 200 ends.

Described next is processing performed by the power storage device 300.

FIG. 8 depicts a flowchart exemplifying an operation performed by the power storage device 300 according to the embodiment.

As shown in FIG. 8, the communications unit 310 first detects that a charge/discharge device has been connected to the power storage device 300 (S202). Here, the power storage device 300 can be connected not only to an authentic charge/discharge device 200 but also to an unauthorized charge/discharge device.

Then, the certificate verification unit 330 performs mutual authentication between the power storage device 300 and the connected charge/discharge device, using the secret key data 371 and the public key certificate 372 stored in the storage unit 370 (S204). A specific description of how the certificate verification unit 330 performs the mutual authentication shall be described later.

Then, when the mutual authentication is properly performed, the processing proceeds to the next step. Here, even though the connected charge/discharge device is an unauthorized one, the mutual authentication could be properly performed between the unauthorized connected charge/discharge device and the power storage device 300, in the case where a cryptographic module of the authentic charge/discharge device 200 is analyzed in an unauthorized manner and the analyzed module is cloned and fraudulently introduced into the unauthorized charge/discharge device.

Then, through the communications unit 310, the certificate information obtaining unit 320 obtains the second identification information from the charge/discharge device connected with the power storage device 300 (S206). Specifically, the certificate information obtaining unit 320 obtains ID information of the public key certificate of the power storage device.

In addition, the charge/discharge device identification information obtaining unit 340 obtains charge/discharge device identification information and the power storage device identification information obtaining unit 350 obtains power storage device identification information, so that the power storage device 300 obtains second connection information including the charge/discharge device identification information and the power storage device identification information (S208).

Then, the control unit 360 stores in the first charge/discharge information 373 in the storage unit 370 the second identification information and the second connection information obtained by the communications unit 310, the certificate information obtaining unit 320, and the charge/discharge device identification information obtaining unit 340 (S210).

Then, the control unit 360 determines whether or not the communications unit 310 can transmit (upload) the second charge/discharge information 373 to the unauthorized connection detecting device 100 (S212). For example, when the power storage device 300 is connected to the charging station 500, the power storage device 300 is connected to the unauthorized connection detecting device 100 via the communications network 600. Hence, the control unit 360 determines that the communications unit 310 can upload the second charge/discharge information 373 to the unauthorized connection detecting device 100.

Then, in the case where the determination result shows that the communications unit 310 can upload the second charge/discharge information 373 to the unauthorized connection detecting device 100 (S212: Y), the control unit 360 causes the communications unit 310 to read the second charge/discharge information 373 from the storage unit 370, and to transmit the read second charge/discharge information 373 to the unauthorized connection detecting device 100 (S214).

In the case where the determination result shows that the communications unit 310 cannot upload the second charge/discharge information 373 to the unauthorized connection detecting device 100 (S212: N), the control unit 360 finishes processing.

It is noted that the control unit 360 may wait until the communications unit 310 is ready to upload the second charge/discharge information 373 to the unauthorized connection detecting device 100. Upon determining that the communications unit 310 is ready for the upload, the control unit 360 may cause the communications unit 310 to transmit the second charge/discharge information 373 to the unauthorized connection detecting device 100.

Alternatively, the control unit 360 may wait until a predetermined amount of information is accumulated in the second charge/discharge information 373. Then, the control unit 360 may cause the communications unit 310 to transmit the second charge/discharge information 373 to the unauthorized connection detecting device 100.

Hence, the processing performed by the power storage device 300 ends.

Next, described in detail is mutual authentication processing (S104 in FIG. 7 and S204 in FIG. 8) performed by a charge/discharge device and a power storage unit. It is noted that the mutual authentication processing is performed (i) by an authentic charge/discharge device 200 and one of an authentic power storage unit and an unauthorized power storage unit, and (ii) by an authentic power storage device 300 and one of an authentic charge/discharge device and an unauthorized charge/discharge device. In the processing below, the mutual authentication is performed by the charge/discharge device 200 and the power storage device 300 for the sake of simplicity.

FIG. 9 depicts a flowchart exemplifying mutual authentication processing performed by the charge/discharge device 200 and the power storage device 300 according to the embodiment.

As shown in FIG. 9, the certificate verification unit 230 in the charge/discharge device 200 first transmits the public key certificate 272 stored in the storage unit 270 to the certificate verification unit 330 in the power storage device 300 (S302). Furthermore, the certificate verification unit 330 transmits the public key certificate 372 stored in the storage unit 370 to the certificate verification unit 230 (S304).

Then, the certificate verification unit 230 checks the received certificate (S306). In the case where the certificate is invalid (S310: N), the processing ends. In the case where the certificate is valid (S310: Y), the processing proceeds to the next step.

Moreover, the certificate verification unit 330 also checks the received certificate (S308). In the case where the certificate is invalid (S312: N), the processing ends. In the case where the certificate is valid (S312: Y), the processing proceeds to the next step.

Then, the certificate verification unit 330 creates a random number r1, and transmits the random number r1 to the certificate verification unit 230 (S314). Then, the certificate verification unit 230 receives the random number r1. In response to the random number r1, the certificate verification unit 230 creates a signature Sig(r1) using a secret key SKs described in the secret key data 271, and a random number r2.

Next, the certificate verification unit 230 transmits the random number r2 and the signature Sig(r1) to the certificate verification unit 330 (S316). Then, the certificate verification unit 330 receives the random number r2 and the signature Sig(r1), and checks the signature Sig(r1) using a public key described in the public key certificate 272.

In the case where the certificate verification unit 330 determines that the signature Sig(r1) is valid, the certificate verification unit 330 creates, in response to the random number r2, a signature Sig(r2) using a secret key SK_i described in the secret key data 371. Then, the certificate verification unit 330 transmits the signature Sig(r2) to the certificate verification unit 230 (S318). In the case where the certificate verification unit 330 determines that the signature Sig(r1) is invalid, the certificate verification unit 330 returns NG to the certificate verification unit 230, and breaks off the connections with the charge/discharge device 200.

Then, the certificate verification unit 230 receives the signature Sig(r2), and checks the signature Sig(r2) using a public key described in the public key certificate 372.

Then, in the case where the certificate verification unit 230 determines that the signature Sig(r2) is valid, the certificate verification unit 230 returns OK to the certificate verification unit 330 (S320). In the case where the certificate verification unit 230 determines that the signature Sig(r2) is invalid, the certificate verification unit 230 returns NG to the certificate verification unit 330, and breaks off the connections with the charge/discharge device 300.

Hence, the mutual authentication processing (S104 in FIG. 7 and S204 in FIG. 8) performed by the charge/discharge device and the power storage unit ends.

Described next is how the unauthorized connection detecting device 100 detects an unauthorized power storage device.

FIG. 10 depicts a flowchart exemplifying an operation of how the unauthorized connection detecting device 100 according to the embodiment detects an unauthorized power storage device.

As shown in FIG. 10, the communications unit 110 first receives the first charge/discharge information 273 from the charge/discharge device 200 via the communications network 600 (S402). Then, the first charge/discharge information 273 received by the communications unit 110 is stored by the control unit 130 in the first charge/discharge information 143 in the storage unit 140 (S402).

Here, in the case where the charge/discharge device 200 is connected with an authentic power storage apparatus, the communications unit 110 receives first charge/discharge information 273 corresponding to the authentic power storage apparatus. In the case where the charge/discharge device 200 is connected with an unauthorized power storage device, the communications unit 110 receives first charge/discharge information 273 corresponding to the unauthorized power storage device.

Then, using the first identification information and the first connection information included in the first charge/discharge information received by the communications unit 110, the unauthorization detecting unit 120 determines whether or not two or more power storage devices associated with a single first identification information item are present (S404).

In the case where the determination result shows that two or more power storage devices associated with a single first identification information item are present (S404: Y), the unauthorization detecting unit 120 detects that the power storage device connected to the charge/discharge device 200 is an unauthorized one (S406). In other words, the unauthorization detecting unit 120 reads the first charge/discharge information 143 stored in the storage unit 140 to perform the above detection.

Specifically, the unauthorization detecting unit 120 detects whether or not the power storage device connected to the charge/discharge device 200 is an unauthorized power storage device, by determining, based on a relationship between times and positions included in a first connection information item associated with a single first identification information item, whether or not two or more power storage devices associated with the single first identification information item are present. Here, the first connection information item is included in the first connection information, and the first connection information item and the single first identification information item are included in the first charge/discharge information.

For example, the unauthorization detecting unit 120 determines whether or not an unnatural relationship is found between the times and positions (i) included in the first connection information and (ii) associated with a single first identification information item, and determines whether or not two or more power storage devices associated with the single first identification information are present. Here, the unnatural relationship is the case where, for example, a power storage device cannot possibly travel a distance between the positions within a time period between the times. Based on a previously prepared database table, the unauthorization detecting unit 120 can determine whether or not the relationship is unnatural.

It is noted that, in the case where the address information of the charge/discharge device 200 and the ID information of the charge/discharge device 200 for identifying the charge/discharge device 200 are associated each other and previously registered in the unauthorized connection detecting device 100, the information on the positions may be the ID information of the charge/discharge device 200.

Then, the control unit 130 creates a list of cryptographic modules of unauthorized power storage devices detected by the unauthorization detecting unit 120, and stores the list in the storage unit 140.

In the case where the determination result shows that no other power storage device associated with a single first identification information is present (S404: N), the unauthorization detecting unit 120 determines that the power storage device is not an unauthorized one and finishes the processing.

Hence, the unauthorized connection detecting device 100 finishes the processing for detecting an unauthorized power storage device.

Described next is how the unauthorized connection detecting device 100 detects an unauthorized charge/discharge device.

FIG. 11 depicts a flowchart exemplifying an operation of how the unauthorized connection detecting device 100 according to the embodiment detects an unauthorized charge/discharge device.

As shown in FIG. 11, the communications unit 110 first receives the second charge/discharge information 373 from the power storage device 300 via the communications network 600 (S502). Then, the second charge/discharge information 373 received by the communications unit 110 is stored by the control unit 130 in the second charge/discharge information 144 in the storage unit 140 (S502).

Here, in the case where the power storage device 300 is connected to an authentic power storage apparatus, the communications unit 110 receives second charge/discharge information 373 corresponding to the authentic power storage apparatus. In the case where the power storage device 300 is connected to an unauthorized power storage device, the communications unit 110 receives second charge/discharge information 373 corresponding to the unauthorized power storage device.

Then, using the second identification information and the second connection information included in the second charge/discharge information received by the communications unit 110, the unauthorization detecting unit 120 determines whether or not two or more charge/discharge devices associated with a single second identification information item are present (S504).

Then, in the case where the determination result shows that two or more charge/discharge device associated with the single second identification information item are present (S504: Y), the unauthorization detecting unit 120 detects that the charge/discharge device connected with the power storage device 300 is an unauthorized one (S506). In other words, the unauthorization detecting unit 120 reads the second charge/discharge information 144 stored in the storage unit 140 to perform the above detection.

Specifically, the unauthorization detecting unit 120 detects whether or not a charge/discharge device connected with the power storage device 300 is an unauthorized charge/discharge device, by determining whether or not two or more charge/discharge device identification information items, included in a second connection information associated with a single second identification information item, indicate mutually different charge/discharge devices, and thereby determining whether or not two or more charge/discharge devices associated with the single second identification information item are present. Here, the two or more charge/discharge device identification information items are included in the charge/discharge device identification information, the second connection information item is included in the second connection information, and the second connection information item and the single second identification item are included in the second charge/discharge information.

To be more specific, the unauthorization detecting unit 120 detects whether or not a charge/discharge device connected with the power storage device 300 is an unauthorized charge/discharge device, by determining whether or not two or more position information items, included in a second connection information item associated with a single second identification information item, indicate mutually different positions, thereby determining whether or not two or more charge/discharge devices associated with the single second identification information item are present. Here, the two or more position information items are included in the position information, the second connection information item is included in the second connection information, and the second connection information item and the single second identification information item are included in the single second identification information.

It is noted that the position information items can indicate different positions each other because the owner of the charge/discharge device has moved to a new address. In this case, the unauthorization detecting unit 120 obtains information showing that the charge/discharge device has moved to accurately determine whether or not two or more charge/discharge devices associated with the above single identification information item are present.

Moreover, the unauthorization detecting unit 120 may detect whether or not a charge/discharge device connected with the power storage device 300 is an unauthorized charge/discharge device by determining whether or not the number of the power storage devices 300, identified by two or more power storage device identification information items included in a second connection information item associated with a single second identification information item, is larger than or equal to a predetermined threshold, thereby determining whether or not two or more charge/discharge devices associated with the single second identification information item are present. Here, the two or more power storage device identification information items are included in the power storage device identification information, the second connection information item is included in the second connection information, and the second connection information item and the single second identification information item are included in the second charge/discharge information

Here, the unauthorization detecting unit 120 may change the above threshold, depending on the kind of a charge/discharge device. In other words, in the case where the charge/discharge device is for a commercial facility or a charging station, the threshold of the unauthorization detecting unit 120 may be set higher than that of the charge/discharge device for the standard home.

Then, the control unit 130 creates a list of cryptographic modules of unauthorized charge/discharge devices detected by the unauthorization detecting unit 120, and stores the list in the storage unit 140.

In the case where the determination result shows that no other charge/discharge device associated with a single second identification information is present (S504: N), the unauthorization detecting unit 120 determines that the charge/discharge device is not an unauthorized one and finishes the processing.

Hence, the unauthorized connection detecting device 100 finishes the processing for detecting an unauthorized charge/discharge device.

### [Modification 1]

Described next is a modification of how the unauthorized connection detecting device 100 detects an unauthorized charge/discharge device.

FIG. 12 depicts a flowchart exemplifying an operation of how the unauthorized connection detecting device 100 according to Modification 1 of the embodiment detects an unauthorized charge/discharge device.

As shown in FIG. 12, the communications unit 110 first receives the second charge/discharge information 373 from the power storage device 300 via the communications network 600 (S602). Then, the second charge/discharge information 373 received by the communications unit 110 is stored by the control unit 130 in the second charge/discharge information 144 in the storage unit 140 (S602).

Then, the unauthorization detecting unit 120 determines whether or not multiple position information items, included in the second connection information and associated with a single second identification information item included in the second charge/discharge information, indicate different positions each other (S604).

Then, in the case where the determination result shows that the multiple position information items indicate a single position (S604: N), the unauthorization detecting unit 120 determines whether or not the number of power storage devices 300 is larger than or equal to a predetermined threshold (S606). Here, the power storage devices 300 are identified by multiple power storage device identification information items (i) included in the second connection information and (ii) associated with a single second identification information item included in the second charge/discharge information.

Then, in the case where the determination result shows that the multiple position information items indicate different positions each other (S604: Y) or the number of power storage devices 300 identified by the multiple power storage device identification information items is larger than or equal to a predetermined threshold (S606: Y), the unauthorization detecting unit 120 detects that the charge/discharge device connected with the power storage device 300 is an unauthorized one (S608).

Then, the control unit 130 creates a list of cryptographic modules of unauthorized charge/discharge devices, and stores the list in the storage unit 140.

Furthermore, in the case where the determination result shows that the number of the power storage devices 300 identified by the multiple power storage device identification information items is smaller than the predetermined threshold (S606: N), the unauthorization detecting unit 120 determines that the charge/discharge device connected with the power storage device 300 is not an unauthorized one, and finishes the processing.

Here, the unauthorization detecting unit 120 may change the above threshold, depending on the kind of a charge/discharge device. In other words, in the case where the charge/discharge device is for a commercial facility or a charging station, the threshold of the unauthorization detecting unit 120 may be set higher than that of the charge/discharge device for the standard home.

Hence, the unauthorized connection detecting device 100 finishes the processing for detecting an unauthorized charge/discharge device.

### [Modification 2]

In the above embodiment and Modification 1, the first identification information is information for identifying a public key certificate of a power storage device connectable to the charge/discharge device 200. In Modification 2, the first identification information is information for identifying a secret key of the power storage device. Moreover, in the above embodiment and Modification 1, the second identification information is information for identifying a public key certificate of a charge/discharge device connectable with the power storage device 300. In Modification 2, the second identification information is information for identifying a secret key of the charge/discharge device.

In other words, the charge/discharge device 200 stores in the storage unit 270 a list of information for identifying a secret key of a power storage device. With reference to the secret key list, the charge/discharge device 200 identifies the secret key of a power storage device connected to the charge/discharge device 200, and stores in the storage unit 270 the first charge/discharge information 273 using the information for identifying the secret key as the first identification information.

Similarly, the power storage device 300 stores in the storage unit 370 a list of information for identifying a secret key of a charge/discharge device. With reference to the secret key list, the power storage device 300 identifies the secret key of a charge/discharge device connected to the power storage device 300, and stores in the storage unit 370 the second charge/discharge information 373 using the information for identifying the secret key as the second identification information.

It is noted that when the unauthorized connection detecting device 100 holds the above secret key list, the charge/discharge device 200 or the power storage device 300 does not have to hold the secret key list. Instead, the charge/discharge device 200 or the power storage device 300 may obtain the list from the unauthorized connection detecting device 100 via the communications network 600. In other words, the charge/discharge device 200 or the power storage device 300 transmits the key ID of a secret key to the unauthorized connection detecting device 100, and obtains information for identifying the secret key. It is noted that, in this case, the unauthorized connection detecting device 100 can prevent an unauthorized connection by performing verification using the received secret key.

Next, described in detail is mutual authentication processing (S104 in FIG. 7 and S204 in FIG. 8) performed by a charge/discharge device and a power storage unit. It is noted that the mutual authentication processing is performed (i) by an authentic charge/discharge device 200 and one of an authentic power storage unit and an unauthorized power storage unit, and (ii) by an authentic power storage device 300 and one of an authentic charge/discharge device and an unauthorized charge/discharge device. In the processing below, the mutual authentication is performed by the charge/discharge device 200 and the power storage device 300 for the sake of simplicity.

FIG. 13 depicts a flowchart exemplifying mutual authentication processing performed by the charge/discharge device 200 and the power storage device 300 according to Modification 2 of the embodiment.

As shown in FIG. 13, the charge/discharge device 200 first transmits a key ID(IDp_i); namely a secret key, to the power storage device 300 (S702). Moreover, the power storage device 300 transmits a key ID (IDv_i); namely a secret key, to the charge/discharge device 200 (S704).

Then, with reference to the secret key list stored in the storage unit 270, the charge/discharge device 200 searches for the secret key of the power storage device 300 (S706). With reference to the secret key list stored in the storage unit 370, the power storage device 300 searches for the secret key of the charge/discharge device 200 (S708).

Then, the power storage device 300 creates a random number r1, and transmits the random number r1 to the charge/discharge device 200 (S710). Then, the charge/discharge device 200 encrypts the received random number r1 with a secret key SKp_i, creates the random number r2, and transmits the encrypted random number r1 and the random number r2 (S712).

Then, the power storage device 300 receives the random number r2 and information created of the encrypted random number r1 with the secret key SKp_i, and checks whether the information matches the result of the encryption of the random number r1 with the secret key SKp_i.

Then, in the case where the power storage device 300 determines that the information matches the encryption result, the power storage device 300 encrypts the random number r2 with a secret key SKv_i and transmits the encrypted random number r2 to the charge/discharge device 200 (S714). It is noted that in the case where the information fails to match the encryption result, the power storage device 300 returns NG to the charge/discharge device 200, and breaks off the connections to the charge/discharge device 200.

Then, the charge/discharge device 200 receives the information created of the encrypted random number r2 with the secret key SKv_i, and checks whether the information matches the result of the encryption of the random number r2 with the secret key SKv_i .

Then, in the case where the charge/discharge device 200 determines that the information matches the encryption result, the charge/discharge device 200 returns OK to the power storage device 300 (S716). It is noted that in the case where the information fails to match the encryption result, the charge/discharge device 200 returns NG to the power storage device 300, and breaks off the connections to the power storage device 300.

Hence, the mutual authentication processing (S104 in FIG. 7 and S204 in FIG. 8) performed by the charge/discharge device and the power storage unit ends.

As described above, the unauthorized connection detecting device 100 according to the embodiment of the present invention and the modifications thereof detects whether or not a power storage device is an unauthorized power storage device by (i) receiving the first charge/discharge information in which the first identification information for identifying a secret key of a power storage device and the first connection information on a power storage device are associated each other, and (ii) determining, using the first charge/discharge information, whether or not two or more power storage devices associated with a single first identification information are present. Here, on authentic power storage devices, a single first identification information item is assigned to one power storage device. When a cryptographic module of an authentic product is introduced in an unauthorized manner, however, two or more power storage devices associated with a single first identification information item are to be present. Hence, in the case where two or more power storage devices associated with a single first identification information are present, the unauthorized connection detecting device 100 can determine that any one or more of the power storage devices are unauthorized ones. Thus, the unauthorized connection detecting device 100 can detect an unauthorized power storage device having a cryptographic module of an authentic product introduced in an unauthorized manner.

Furthermore, the unauthorized connection detecting device 100 detects whether or not a power storage device is an unauthorized power storage device by determining, based on a relationship between times and positions associated with a single first identification information item, whether or not two or more power storage devices associated with the single first identification information item are present. In other words, in the case where there is an unnatural relationship between times and positions associated with a single first identification information item, the unauthorized connection detecting device 100 determines that two or more power storage devices associated with the single first identification information item are present. For example, in the case where a power storage device cannot possibly travel a distance between two positions within a time period between two times when the two positions and the two times are associated with a single first identification information item, the unauthorized connection detecting device 100 determines that two or more power storage devices associated with the single first identification information item are present. Thus, the unauthorized connection detecting device 100 can detect an unauthorized power storage device having a cryptographic module of an authentic product introduced in an unauthorized manner.

In addition, information on a time included in the first charge/discharge information received by the unauthorized connection detecting device 100 is time information indicating the time at which a charge/discharge device charges or discharges a power storage device. Information on a position is position information such as GPS information indicating a position of the charge/discharge device. Since the above features allow the unauthorized connection detecting device 100 to receive easily created first charge/discharge information, the unauthorized connection detecting device 100 can easily detect an unauthorized power storage device having a cryptographic module of an authentic product introduced in an unauthorized manner.

In addition, the unauthorized connection detecting device 100 detects whether or not a charge/discharge device is an unauthorized charge/discharge device by receiving the second charge/discharge information in which the second identification information and the second connection information are associated each other, and (ii) determining, using the second charge/discharge information, whether or not two or more charge/discharge devices associated with a single second identification information item are present. The second identification information is information for identifying the encryption key of the charge/discharge device, and the second connection information is information on the charge/discharge device. Here, on authentic charge/discharge devices, a single second identification information item is assigned to one charge/discharge device. When a cryptographic module of an authentic product is introduced in an unauthorized manner, however, two or more charge/discharge devices associated with a single second identification information item are to be present. Hence, in the case where two or more charge/discharge devices associated with a single second identification information item are present, the unauthorized connection detecting device 100 can determine that any one or more of the power storage devices are unauthorized ones. Thus, the unauthorized connection detecting device 100 can detect an unauthorized charge/discharge device having a cryptographic module of an authentic product introduced in an unauthorized manner.

Furthermore, the unauthorized connection detecting device 100 detects whether or not a charge/discharge device is an unauthorized charge/discharge device, by determining whether or not two or more charge/discharge device identification information items associated with a single second identification information item indicate mutually different charge/discharge devices, thereby determining whether or not two or more charge/discharge devices associated with the single second identification information item are present. In other words, in the case where two or more charge/discharge device identification information items associated with a single second identification information item indicate different charge/discharge devices, the unauthorized connection detecting device 100 determines that two or more charge/discharge devices associated with the single second identification information item are present. Thus, the unauthorized connection detecting device 100 can detect an unauthorized charge/discharge device having a cryptographic module of an authentic product introduced in an unauthorized manner.

Moreover, the charge/discharge device identification information included in the second charge/discharge information received by the unauthorized connection detecting device 100 is position information indicating the position of a charge/discharge device. The unauthorized connection detecting device 100 detects whether or not a charge/discharge device is an unauthorized charge/discharge device by determining whether or not two or more position information items associated with a single second identification information item indicate different positions each other, thereby determining whether or not two or more charge/discharge devices associated with the single second identification information item are present. The two or more position information items are included in the position information. Here, the charge/discharge device is placed at a predetermined position, and never found at two or more sites. Hence, in the case where two or more position information items associated with a single second identification information item indicate different positions each other, the unauthorized connection detecting device 100 determines that two or more charge/discharge devices associated with the single second identification information item are present. Thus, the unauthorized connection detecting device 100 can detect an unauthorized charge/discharge device having a cryptographic module of an authentic product introduced in an unauthorized manner.

Furthermore, the charge/discharge device identification information included in the second charge/discharge information received by the unauthorized connection detecting device 100 may be direct current information indicating a fluctuation of a direct current provided from a charge/discharge device. The unauthorized connection detecting device 100 may detect whether or not a charge/discharge device is an unauthorized charge/discharge device, by determining whether or not two or more direct current information items associated with a single second identification information item indicate mutually different fluctuations, thereby determining whether or not two or more charge/discharge devices associated with the single second identification information item are present. The two or more direct current information items are included in the direct current information. Here, a direct current provided from a charge/discharge device has fluctuation which is unique to the charge/discharge device itself. Through the analysis of the fluctuation using a phase sample of the direct current, the charge/discharge device can be identified. Hence, in the case where two or more direct current information items associated with a single second identification information item indicate different fluctuations each other, the unauthorized connection detecting device 100 determines that two or more charge/discharge devices associated with the single second identification information item are present. Thus, the unauthorized connection detecting device 100 can detect an unauthorized charge/discharge device having a cryptographic module of an authentic product introduced in an unauthorized manner.

Moreover, the unauthorized connection detecting device 100 detects whether or not a charge/discharge device is an unauthorized charge/discharge device by determining whether or not the number of power storage devices, identified by two or more power storage device identification information items associated with a single second identification information item, is larger than or equal to a predetermined threshold, thereby determining whether or not two or more charge/discharge devices associated with the single second identification information item are present. Here, the two or more power storage device identification information items being included in the power storage device identification information. Here, the number of power storage devices to be connected to one charge/discharge device is limited. In the case where the number of the connected power storage devices is larger than or equal to a predetermined threshold, two or more charge/discharge devices associated with a single second identification information item are to be present. In other words, in the case where the number of power storage devices associated with a single second identification information item is larger than or equal to a predetermined threshold, the unauthorized connection detecting device 100 determines that two or more charge/discharge devices associated with the single second identification information item are present. Thus, the unauthorized connection detecting device 100 can detect an unauthorized charge/discharge device having a cryptographic module of an authentic product introduced in an unauthorized manner.

Furthermore, the unauthorized connection detecting device 100 receives information via the communications network 600 connected either with the charging station 500 or a charge/discharge device. In other words, when a power storage device is either charged at the charging station 500 or one of charged and discharged by a charge/discharge device, the unauthorized connection detecting device 100 can easily receive the information. Thus, the unauthorized connection detecting device 100 can easily obtain information and detect an unauthorized charge/discharge device having a cryptographic module of an authentic product introduced in an unauthorized manner.

Although described in detail above is the unauthorized connection detecting device 100 according to an exemplary embodiment and modifications thereof, those skilled in the art will readily appreciate that various modifications may be made in the exemplary embodiment and the modifications without materially departing from the principles and spirit of the inventive concept, the scope of which is defined in the appended Claims and their equivalents. Moreover, constituent elements in the embodiment and the modifications may be combined each other.

For example, in the present embodiment and the modifications thereof, the unauthorized connection detecting system 10 includes both of the charge/discharge device 200 and the power storage device 300. However, the unauthorized connection detecting device 100 may have only one of the charge/discharge device 200 and the power storage device 300.

Moreover, the unauthorized connection detecting device 100 does not have to include all the constituent features shown in FIG. 2. FIG. 14 depicts a block diagram showing a minimal structure of the unauthorized connection detecting device according to the embodiment and Modifications thereof. As shown in FIG. 14, an unauthorized connection detecting device 101 includes at least the communications unit 110 and the unauthorization detecting unit 120. Such a structure makes it possible to achieve an effect similar to that of the unauthorized connection detecting device 100 according to the embodiment and the modifications thereof.

In addition, the present invention can be implemented in the form of an unauthorized connection detecting method including characteristic processing to be carried out by the unauthorized connection detecting device or the unauthorized connection detecting system as steps. Moreover, the steps included in the unauthorized connection detecting method may be implemented in the form of a program to be executed by a computer and a computer-readable recording medium in which the program is stored. As a matter of course, the program may be distributed via a recording medium such as a CD-ROM and a transmission medium such as the Internet.

In other words, in the embodiment, each of the constituent elements may be formed of dedicated hardware and implemented by executing software which is suitable to each constituent element. For example, each of the constituent elements may be implemented by a program executing unit, such as a CPU or a processor, reading and executing a software program stored in a recording medium such as a hard disc or a semiconductor memory.

In other words, each of the constituent elements in the unauthorized connection detecting device shown in FIG. 2 or FIG. 14 may be implemented in the form of software. Then, the software to implement an unauthorized connection detecting device in the embodiment is a program to cause a computer to execute the steps included in the unauthorized connection detecting method below. In other words, the unauthorized connection detecting method is employed by an unauthorized connection detecting device for detecting whether or not a power storage device that is connectable to a charge/discharge device for charging or discharging with power is an unauthorized power storage device. The unauthorized connection detecting method includes: receiving by the unauthorized connection detecting device first charge/discharge information in which first identification information and first connection information are associated each other, the first identification information being information for identifying an encryption key of the power storage device used for mutual authentication between the charge/discharge device and the power storage device connectable to the charge/discharge device, and the first connection information being information on the power storage device and obtained when the power storage device is connected to the charge/discharge device; and detecting by the unauthorized connection detecting device whether or not the power storage device connected to the charge/discharge device is the unauthorized power storage device, by determining, using the first identification information and the first connection information included in the received first charge/discharge information, whether or not two or more power storage devices associated with a single first identification information item are present.

Moreover, the unauthorized connection detecting method is employed by an unauthorized connection detecting device for detecting whether or not a charge/discharge device that is connectable with a power storage device and charges or discharges the power storage device is an unauthorized charge/discharge device. The unauthorized connection detecting method includes: receiving by the unauthorized connection detecting device second charge/discharge information in which second identification information and second connection information are associated each other, the second identification information being information for identifying an encryption key of the charge/discharge device used for mutual authentication between the power storage device and the charge/discharge device connectable with the power storage device, and the second connection information being information on the charge/discharge device and obtained when the charge/discharge device is connected with the power storage device; and detecting by the unauthorized connection detecting device whether or not the charge/discharge device connected with the power storage device is the unauthorized charge/discharge device, by determining, using the second identification information and the second connection information included in the received second charge/discharge information, whether or not two or more charge/discharge devices associated with a single second identification information item are present.

In addition, each of the processing units included in an unauthorized connection detecting device according to an implementation of the present invention may be implemented in the form of an integrated circuit; namely, the large scale integration (LSI). In other words, each of the processing units included in FIG. 2 or FIG. 14 may made as separate individual chips, or as a single chip to include a part or all of the processing units.

Furthermore, here, LSI is mentioned but there are instances where, due to a difference in the degree of integration, the designations IC, LSI, super LSI, and ultra LSI are used.

Furthermore, the means for circuit integration is not limited to the LSI, and implementation in the form of a dedicated circuit or a general-purpose processor is also available. In addition, it is also acceptable to use a Field Programmable Gate Array (FPGA) that is programmable after the LSI has been manufactured, and a reconfigurable processor in which connections and settings of circuit cells within the LSI are reconfigurable.

Furthermore, if an integrated circuit technology that replaces the LSI appears thorough the progress in the semiconductor technology or an other derived technology, that technology can naturally be used to carry out integration of the constituent elements. Biotechnology can be applied to the integrated circuit technology.

### [Industrial Applicability]

The present invention is applicable to an unauthorized connection detecting device which is capable of detecting an unauthorized power storage device or an unauthorized charge/discharge device that have a cryptographic module of an authentic product introduced thereinto in an unauthorized manner.

### [Reference Signs List]

10 Unauthorized connection detecting system
100, 101 Unauthorized connection detecting device
110 Communications unit
120 Unauthorization detecting unit
130 Control unit
140 Storage unit
141 Secret key data
142 Public key certificate
143 First charge/discharge information
144 Second charge/discharge information
200 Charge/discharge device
210 Communications unit
220 Certificate information obtaining unit
230 Certificate verification unit
240 Time information detecting unit
250 Position information detecting unit
260 Control unit
270 Storage unit
271 Secret key data
272 Public key certificate
273 First charge/discharge information
300 Power storage device
310 Communications unit
320 Certificate information obtaining unit
330 Certificate verification unit
340 Charge/discharge device identification information obtaining unit
350 Power storage device identification information obtaining unit
360 Control unit
370 Storage unit
371 Secret key data
372 Public key certificate
373 Second charge/discharge information
400 House
500 Charging station
600 Communications network

## Claims

1. An unauthorized connection detecting device (100) which detects whether or not a power storage device (300) that is connectable to a charge/discharge device (200) for charging or discharging with power is an unauthorized power storage device, the unauthorized connection detecting device (100) comprising:
a communications unit (110) configured to receive first charge/discharge information (143) in which first identification information and first connection information are associated each other,
the first identification information being information for identifying an encryption key of the power storage device (300) used for mutual authentication between the charge/discharge device (200) and the power storage device (300) connectable to the charge/discharge device (200),
and the first connection information being information on the power storage device (300) and obtained when the power storage device (300) is connected to the charge/discharge device (200);
a control unit (130);
a storage unit (140); and
an unauthorization detecting unit (120) configured to determine, using the first identification information and the first connection information included in the received first charge/discharge information, whether or not two or more power storage devices associated with a single first identification information item are present by reading through the control unit (130) the first charge/discharge information (143) stored in the storage unit (140), and detect that the power storage device (300) connected to the charge/discharge device (200) is the unauthorized power storage device if the two or more power storage devices associated with the single first identification information item are determined to be present.

2. The unauthorized connection detecting device (100) according to Claim 1,
wherein the communications unit (110) is configured to receive the first charge/discharge information (273) in which the first identification information and the first connection information are associated each other, the first connection information including information indicating a time and a position when and where the power storage device was charged or discharged, and
the unauthorization detecting unit (120) is configured to detect whether or not the power storage device (300) connected to the charge/discharge device (200) is the unauthorized power storage device, by determining, based on a relationship between times and positions included in a first connection information item associated with a single first identification information item, whether or not two or more power storage devices associated with the single first identification information item are present, the first connection information item being included in the first connection information, and the first connection information item and the single first identification information item being included in the received first charge/discharge information.

3. The unauthorized connection detecting device (100) according to Claim 2,
wherein the communications unit (110) is configured to receive the first charge/discharge information (273) in which the first identification information, time information, and position information are associated one another, the time information indicating a time when the charge/discharge device (200) charged or discharged the power storage device (300), and the position information indicating a position where the charge/discharge device (200) was.

4. An unauthorized connection detecting device (100) which detects whether or not a charge/discharge device (200) that is connectable with a power storage device (300) and charges or discharges the power storage device (300) is an unauthorized charge/discharge device, the unauthorized connection detecting device (100) comprising:
a communications unit (110) configured to receive second charge/discharge information in which second identification information and second connection information are associated each other, the second identification information being information for identifying an encryption key of the charge/discharge device used for mutual authentication between the power storage device and the charge/discharge device connectable with the power storage device, and the second connection information being information on the charge/discharge device and obtained when the charge/discharge device is connected with the power storage device;
a control unit (130);
a storage unit (140); and
an unauthorization detecting unit (120) configured to determine, using the second identification information and the second connection information included in the received second charge/discharge information, whether or not two or more charge/discharge devices associated with a single second identification information item are present by reading through the control unit (130) the second charge/discharge information (143) stored in the storage unit (140), and detect that the charge/discharge device (200) connected with the power storage device is the unauthorized charge/discharge device, if the two or more charge/discharge devices associated with a single second identification information item are determined to be present.

5. The unauthorized connection detecting device (100) according to Claim 4,
wherein the communications unit (110) is configured to receive the second charge/discharge information in which the second identification information and the second connection information are associated each other, the second connection information including charge/discharge device identification information identifying the charge/discharge device, and
the unauthorization detecting unit (120) is configured to detect whether or not the charge/discharge device connected with the power storage device is the unauthorized charge/discharge device, by determining whether or not two or more charge/discharge device identification information items, included in a second connection information item associated with a single second identification information item, indicate mutually different charge/discharge devices, thereby determining whether or not two or more charge/discharge devices associated with the single second identification information item are present, the two or more charge/discharge device identification information items being included in the charge/discharge device identification information, the second connection information item being included in the second connection information, and the second connection information item and the single second identification item being included in the received second charge/discharge information.

6. The unauthorized connection detecting device (100) according to Claim 5,
wherein the communications unit (110) is configured to receive the second charge/discharge information in which the second identification information and the second connection information are associated each other, the second connection information including, as the charge/discharge device identification information, position information indicating a position of the charge/discharge device, and
the unauthorization detecting unit (120) is configured to detect whether or not the charge/discharge device (200) connected with the power storage device (300) is the unauthorized charge/discharge device, by determining whether or not two or more position information items, included in a second connection information item associated with a single second identification information item, indicate mutually different positions, thereby determining whether or not two or more charge/discharge devices associated with the single second identification information item are present, the two or more position information items being included in the position information, the second connection information item being included in the second connection information, and the second connection information item and the single second identification information item being included in the received second charge/discharge information.

7. The unauthorized connection detecting device (100) according to Claim 5,
wherein the communications unit (110) is configured to receive the second charge/discharge information in which the second identification information and the second connection information are associated each other, the second connection information including direct current information indicating, as the charge/discharge device identification information, a fluctuation of a direct current provided from the charge/discharge device, and
the unauthorization detecting unit (120) is configured to detect whether or not the charge/discharge device connected with the power storage device is the unauthorized charge/discharge device, by determining whether or not two or more direct current information items, included in a second connection information item associated with a single second identification information item, indicate mutually different fluctuations, thereby determining whether or not two or more charge/discharge devices associated with the single second identification information item are present, the two or more direct current information items being included in the direct current information, the second connection information item being included in the second connection information, and the second connection information item and the single second identification information item being included in the received second charge/discharge information.

8. The unauthorized connection detecting device (100) according to any one of Claims 4 to 7,
wherein the communications unit (110) is configured to receive the second charge/discharge information in which the second identification information and the second connection information are associated each other, the second connection information including the power storage device identification information identifying the power storage device connected to the charge/discharge device, and
the unauthorization detecting unit (120) is configured to detect whether or not the charge/discharge device (200) connected with the power storage device (300) is the unauthorized charge/discharge device, by determining whether or not the number of power storage devices, identified by two or more power storage device identification information items included in a second connection information item associated with a single second identification information item, is larger than or equal to a predetermined threshold, thereby determining whether or not two or more charge/discharge devices associated with the single second identification information item are present, the two or more power storage device identification information items being included in the power storage device identification information, the second connection information item being included in the second connection information, and the second connection information item and the single second identification information item being included in the received second charge/discharge information.

9. The unauthorized connection detecting device (100) according to any one of Claims 1 to 8,
wherein the communications unit (110) is configured to receive information via one of a communications network connected with a charge station for charging the power storage device when the power storage device is connected and a communications network connected to the charge/discharge device.

10. An unauthorized connection detecting system (10) which detects whether or not a power storage device is an unauthorized power storage device, the unauthorized connection detecting system comprising:
a charge/discharge device which charges or discharges with power; and
the unauthorized connection detecting device according to any one of Claims 1 to 3 and 9 which detects whether or not a power storage device that is connectable to the charge/discharge device is an unauthorized power storage device.

11. An unauthorized connection detecting system (10) which detects whether or not a charge/discharge device for charging or discharging with power is an unauthorized charge/discharge device, the unauthorized connection detecting system comprising:
a power storage device; and
an unauthorized connection detecting device according to any one of Claims 4 to 9 which detects whether or not a charge/discharge device that is connectable with the power storage device and charges or discharges the power storage device is an unauthorized charge/discharge device.

12. An unauthorized connection detecting method employed by an unauthorized connection detecting device for detecting whether or not a power storage device that is connectable to a charge/discharge device for charging or discharging with power is an unauthorized power storage device, the unauthorized connection detecting method comprising:
receiving by the unauthorized connection detecting device first charge/discharge information in which first identification information and first connection information are associated each other, the first identification information being information for identifying an encryption key of the power storage device used for mutual authentication between the charge/discharge device and the power storage device connectable to the charge/discharge device, and the first connection information being information on the power storage device and obtained when the power storage device is connected to the charge/discharge device; and
determining, using the first identification information and the first connection information included in the received first charge/discharge information, whether or not two or more power storage devices associated with a single first identification information item are present by reading through a control unit (130) the first charge/discharge information (143) stored in a storage unit (140), and
detecting by the unauthorized connection detecting device that the power storage device connected to the charge/discharge device is the unauthorized power storage device if the two or more power storage devices associated with the single first identification information item are determined to be present.

13. An unauthorized connection detecting method employed by an unauthorized connection detecting device for detecting whether or not a charge/discharge device that is connectable with a power storage device and charges or discharges the power storage device is an unauthorized charge/discharge device, the unauthorized connection detecting device comprising:
receiving by the unauthorized connection detecting device second charge/discharge information in which second identification information and second connection information are associated each other, the second identification information being information for identifying an encryption key of the charge/discharge device used for mutual authentication between the power storage device and the charge/discharge device connectable with the power storage device, and the second connection information being information on the charge/discharge device and obtained when the charge/discharge device is connected with the power storage device; and
determining, using the second identification information and the second connection information included in the received second charge/discharge information, whether or not two or more charge/discharge devices associated with a single second identification information item are present by reading through a control unit (130) the second charge/discharge information (143) stored in a storage unit (140), and detecting that the charge/discharge device (200) connected with the power storage device is the unauthorized charge/discharge device, if the two or more charge/discharge devices associated with a single second identification information item are determined to be present.

14. A program which causes a computer to execute the steps included in the unauthorized connection detecting method according to one of Claims 12 and 13.

15. A computer-readable recording medium which records the program according to Claim 14.

16. An integrated circuit which detects whether or not a power storage device that is connectable to a charge/discharge device for charging or discharging with power is an unauthorized power storage device, the integrated circuit comprising:
the unauthorized connection detecting device of claim 1.

17. An integrated circuit which detects whether or not a charge/discharge device that is connectable with a power storage device and charges or discharges the power storage device is an unauthorized charge/discharge device, the integrated circuit comprising:
the unauthorized connection detecting device of claim 4.

## Patentansprüche

1. Detektionsvorrichtung (100) für unautorisierte Verbindungen, die detektiert, ob eine Leistungsspeichervorrichtung (300), die zum Laden oder Entladen mit Leistung mit einer Lade-/Entladevorrichtung (200) verbindbar ist, eine unautorisierte Leistungsspeichervorrichtung ist, wobei die Detektionsvorrichtung (100) für unautorisierte Verbindungen Folgendes umfasst:
eine Kommunikationseinheit (110), die dazu ausgelegt ist, erste Lade-/Entladeinformationen (143) zu empfangen, in denen erste Identifikationsinformationen und erste Verbindungsinformationen miteinander verknüpft sind,
wobei die ersten Identifikationsinformationen Informationen zum Identifizieren eines Verschlüsselungsschlüssels der Leistungsspeichervorrichtung (300) sind, der für die gegenseitige Authentifizierung zwischen der Lade-/Entladevorrichtung (200) und der Leistungsspeichervorrichtung (300), die mit der Lade-/Entladevorrichtung (200) verbindbar ist, verwendet wird,
und wobei die ersten Verbindungsinformationen Informationen zur Leistungsspeichervorrichtung (300) sind und erhalten werden, wenn die Leistungsspeichervorrichtung (300) mit der Lade-/Entladevorrichtung (200) verbunden wird;
eine Steuereinheit (130);
eine Speichereinheit (140) und
eine Nichtautorisierungsdetektionseinheit (120), die dazu ausgelegt ist, unter Verwendung der ersten Identifikationsinformationen und der ersten Verbindungsinformationen, die in den empfangenen ersten Lade-/Entladeinformationen beinhaltet sind, durch Lesen der ersten Lade-/Entladeinformationen (143), die in der Speichereinheit (140) gespeichert sind, durch die Steuereinheit (130) zu bestimmen, ob zwei oder mehr Leistungsspeichervorrichtungen, die mit einem einzelnen ersten Identifikationsinformationselement verknüpft sind, vorhanden sind oder nicht, und zu detektieren, dass die Leistungsspeichervorrichtung (300), die mit der Lade-/Entladevorrichtung (200) verbunden ist, die unautorisierte Leistungsspeichervorrichtung ist, wenn bestimmt wird, dass die zwei oder mehr Leistungsspeichervorrichtungen, die mit dem einzelnen ersten Identifikationsinformationselement verknüpft sind, vorhanden sind.

2. Detektionsvorrichtung (100) für unautorisierte Verbindungen nach Anspruch 1,
wobei die Kommunikationseinheit (110) dazu ausgelegt ist, die ersten Lade-/Entladeinformationen (273) zu empfangen, in denen die ersten Identifikationsinformationen und die ersten Verbindungsinformationen miteinander verknüpft sind, wobei die ersten Verbindungsinformationen Informationen beinhalten, die eine Zeit und eine Position anzeigen, wann und wo die Leistungsspeichervorrichtung geladen oder entladen wurde, und
die Nichtautorisierungsdetektionseinheit (120) ist dazu ausgelegt, durch Bestimmen auf Basis einer Beziehung zwischen Zeiten und Positionen, die in einem ersten Verbindungsinformationselement beinhaltet sind, das mit einem einzelnen ersten Identifikationsinformationselement verknüpft ist, zu detektieren, ob die Leistungsspeichervorrichtung (300), die mit der Lade-/Entladevorrichtung (200) verbunden ist, die unautorisierte Leistungsspeichervorrichtung ist oder nicht, ob zwei oder mehr Leistungsspeichervorrichtungen, die mit dem einzelnen ersten Identifikationsinformationselement verknüpft sind, vorhanden sind oder nicht, wobei das erste Verbindungsinformationselement in den ersten Verbindungsinformationen beinhaltet ist und wobei das erste Verbindungsinformationselement und das einzelne erste Identifikationsinformationselement in den empfangenen ersten Lade-/Entladeinformationen beinhaltet sind.

3. Detektionsvorrichtung (100) für unautorisierte Verbindungen nach Anspruch 2,
wobei die Kommunikationseinheit (110) dazu ausgelegt ist, die ersten Lade-/Entladeinformationen (273) zu empfangen, in denen die ersten Identifikationsinformationen, Zeitinformationen und Positionsinformationen miteinander verknüpft sind, wobei die Zeitinformationen eine Zeit anzeigen, wann die Lade-/Entladevorrichtung (200) die Leistungsspeichervorrichtung (300) geladen oder entladen hat, und die Positionsinformationen eine Position anzeigen, in der sich die Lade-/Entladevorrichtung (200) befand.

4. Detektionsvorrichtung (100) für unautorisierte Verbindungen, die detektiert, ob eine Lade-/Entladevorrichtung (200), die mit einer Leistungsspeichervorrichtung (300) verbindbar ist und die Leistungsspeichervorrichtung (300) lädt oder entlädt, eine unautorisierte Lade-/Entladevorrichtung ist oder nicht, wobei die Detektionsvorrichtung (100) für unautorisierte Verbindungen Folgendes umfasst:
eine Kommunikationseinheit (110), die dazu ausgelegt ist, zweite Lade-/Entladeinformationen zu empfangen, in denen zweite Identifikationsinformationen und zweite Verbindungsinformationen miteinander verknüpft sind, wobei die zweiten Identifikationsinformationen Informationen zum Identifizieren eines Verschlüsselungsschlüssels der Lade-/Entladevorrichtung sind, der zum gegenseitigen Authentifizieren zwischen der Leistungsspeichervorrichtung und der Lade-/Entladevorrichtung, die mit der Leistungsspeichervorrichtung verbindbar ist, verwendet wird, und die zweiten Verbindungsinformationen Informationen zur Lade-/Entladevorrichtung sind und erhalten werden, wenn die Lade-/Entladevorrichtung mit der Leistungsspeichervorrichtung verbunden wird;
eine Steuereinheit (130);
eine Speichereinheit (140) und
eine Nichtautorisierungsdetektionseinheit (120), die dazu ausgelegt ist, unter Verwendung der zweiten Identifikationsinformationen und der zweiten Verbindungsinformationen, die in den empfangenen zweiten Lade-/Entladeinformationen beinhaltet sind, durch Lesen der zweiten Lade-/Entladeinformationen (143), die in der Speichereinheit (140) gespeichert sind, durch die Steuereinheit (130) zu bestimmen, ob zwei oder mehr Lade-/Entladevorrichtungen, die mit einem einzelnen zweiten Identifikationsinformationselement verknüpft sind, vorhanden sind oder nicht, und zu detektieren, dass die Lade-/Entladevorrichtung (200), die mit der Leistungsspeichervorrichtung verbunden ist, die unautorisierte Lade-/Entladevorrichtung ist, wenn bestimmt wird, dass die zwei oder mehr Lade-/Entladevorrichtungen, die mit einem einzelnen zweiten Identifikationsinformationselement verknüpft sind, vorhanden sind.

5. Detektionsvorrichtung (100) für unautorisierte Verbindungen nach Anspruch 4,
wobei die Kommunikationseinheit (110) dazu ausgelegt ist, die zweiten Lade-/Entladeinformationen zu empfangen, in denen die zweiten Identifikationsinformationen und die zweiten Verbindungsinformationen miteinander verknüpft sind, wobei die zweiten Verbindungsinformationen Informationen zum Identifizieren einer Lade-/Entladevorrichtung beinhalten, die die Lade-/Entladevorrichtung identifizieren, und
die Nichtautorisierungsdetektionseinheit (120) ist dazu ausgelegt, durch Bestimmen, ob zwei oder mehr Informationselemente zum Identifizieren einer Lade-/Entladevorrichtung, die in einem zweiten Verbindungsinformationselement beinhaltet sind, das mit einem einzelnen zweiten Identifikationsinformationselement verknüpft ist, gegenseitig verschiedene Lade-/Entladevorrichtungen anzeigen, zu detektieren, ob die Lade-/Entladevorrichtung, die mit der Leistungsspeichervorrichtung verbunden ist, die unautorisierte Lade-/Entladevorrichtung ist oder nicht, wodurch bestimmt wird, ob zwei oder mehr Lade-/Entladevorrichtungen, die mit dem einzelnen zweiten Identifikationsinformationselement verknüpft sind, vorhanden sind oder nicht, wobei die zwei oder mehr Informationselemente zum Identifizieren einer Lade-/Entladevorrichtung in den Informationen zum Identifizieren einer Lade-/Entladevorrichtung beinhaltet sind, wobei das zweite Verbindungsinformationselement in den zweiten Verbindungsinformationen beinhaltet ist und wobei das zweite Verbindungsinformationselement und das einzelne zweite Identifikationselement in den empfangenen zweiten Lade-/Entladeinformationen beinhaltet sind.

6. Detektionsvorrichtung (100) für unautorisierte Verbindungen nach Anspruch 5,
wobei die Kommunikationseinheit (110) dazu ausgelegt ist, die zweiten Lade-/Entladeinformationen zu empfangen, in denen die zweiten Identifikationsinformationen und die zweiten Verbindungsinformationen miteinander verknüpft sind, wobei die zweiten Verbindungsinformationen Positionsinformationen, die eine Position der Lade-/Entladevorrichtung anzeigen, als die Informationen zum Identifizieren einer Lade-/Entladevorrichtung beinhalten, und
die Nichtautorisierungsdetektionseinheit (120) ist dazu ausgelegt, durch Bestimmen, ob zwei oder mehr Positionsinformationselemente, die in einem zweiten Verbindungsinformationselement beinhaltet sind, das mit einem einzelnen zweiten Identifikationsinformationselement verknüpft ist, gegenseitig verschiedene Positionen anzeigen, zu detektieren, ob die Lade-/Entladevorrichtung (200), die mit der Leistungsspeichervorrichtung (300) verbunden ist, die unautorisierte Lade-/Entladevorrichtung ist oder nicht, wodurch bestimmt wird, ob zwei oder mehr Lade-/Entladevorrichtungen, die mit dem einzelnen zweiten Identifikationsinformationselement verknüpft sind, vorhanden sind oder nicht, wobei die zwei oder mehr Positionsinformationselemente in den Positionsinformationen beinhaltet sind, wobei das zweite Verbindungsinformationselement in den zweiten Verbindungsinformationen beinhaltet ist und wobei das zweite Verbindungsinformationselement und das einzelne zweite Identifikationsinformationselement in den empfangenen zweiten Lade-/Entladeinformationen beinhaltet sind.

7. Detektionsvorrichtung (100) für unautorisierte Verbindungen nach Anspruch 5,
wobei die Kommunikationseinheit (110) dazu ausgelegt ist, die zweiten Lade-/Entladeinformationen zu empfangen, in denen die zweiten Identifikationsinformationen und die zweiten Verbindungsinformationen miteinander verknüpft sind, wobei die zweiten Verbindungsinformationen Gleichstrominformationen, die eine Schwankung eines Gleichstroms, der von der Lade-/Entladevorrichtung bereitgestellt wird, anzeigt, als die Informationen zum Identifizieren einer Lade-/Entladevorrichtung beinhalten, und
die Nichtautorisierungsdetektionseinheit (120) ist dazu ausgelegt, durch Bestimmen, ob zwei oder mehr Gleichstrominformationselemente, die in einem zweiten Verbindungsinformationselement beinhaltet sind, das mit einem einzelnen zweiten Identifikationsinformationselement verknüpft ist, gegenseitig verschiedene Schwankungen anzeigen, zu detektieren, ob die Lade-/Entladevorrichtung, die mit der Leistungsspeichervorrichtung verbunden ist, die unautorisierte Lade-/Entladevorrichtung ist oder nicht, wodurch bestimmt wird, ob zwei oder mehr Lade-/Entladevorrichtungen, die mit dem einzelnen zweiten Identifikationsinformationselement verknüpft sind, vorhanden sind ,wobei die zwei oder mehr Gleichstrominformationselemente in den Gleichstrominformationen beinhaltet sind, wobei das zweite Verbindungsinformationselement in den zweiten Verbindungsinformationen beinhaltet ist und wobei das zweite Verbindungsinformationselement und das einzelne zweite Identifikationsinformationselement in den empfangenen zweiten Lade-/Entladeinformationen beinhaltet sind.

8. Detektionsvorrichtung (100) für unautorisierte Verbindungen nach einem der Ansprüche 4 bis 7,
wobei die Kommunikationseinheit (110) dazu ausgelegt ist, die zweiten Lade-/Entladeinformationen zu empfangen, in denen die zweiten Identifikationsinformationen und die zweiten Verbindungsinformationen miteinander verknüpft sind, wobei die zweiten Verbindungsinformationen Informationen zum Identifizieren einer Leistungsspeichervorrichtung beinhalten, die die Leistungsspeichervorrichtung, die mit der Lade-/Entladevorrichtung verbunden ist, identifizieren, und
die Nichtautorisierungsdetektionseinheit (120) ist dazu ausgelegt, durch Bestimmen, ob die Anzahl von Leistungsspeichervorrichtungen, die von zwei oder mehr Informationselementen zum Identifizieren einer Leistungsspeichervorrichtung, die in einem zweiten Verbindungsinformationselement beinhaltet sind, das mit einem einzelnen zweiten Identifikationsinformationselement verknüpft ist, gleich oder größer als ein vorbestimmter Schwellwert ist, zu detektieren, ob die Lade-/Entladevorrichtung (200), die mit der Leistungsspeichervorrichtung (300) verbunden ist, die unautorisierte Lade-/Entladevorrichtung ist oder nicht, wodurch bestimmt wird, ob zwei oder mehr Lade-/Entladevorrichtungen, die mit dem einzelnen zweiten Identifikationsinformationselement verknüpft sind, vorhanden sind oder nicht, wobei die zwei oder mehr Informationselemente zum Identifizieren einer Leistungsspeichervorrichtung in den Informationen zum Identifizieren einer Leistungsspeichervorrichtung beinhaltet sind, wobei das zweite Verbindungsinformationselement in den zweiten Verbindungsinformationen beinhaltet ist und wobei das zweite Verbindungsinformationselement und das einzelne zweite Identifikationsinformationselement in den empfangenen zweiten Lade-/Entladeinformationen beinhaltet sind.

9. Detektionsvorrichtung (100) für unautorisierte Verbindungen nach einem der Ansprüche 1 bis 8,
wobei die Kommunikationseinheit (110) dazu ausgelegt ist, Informationen via eines von einem Kommunikationsnetzwerk, das mit einer Ladestation zum Laden der Leistungsspeichervorrichtung verbunden ist, wenn die Leistungsspeichervorrichtung verbunden ist, und einem Kommunikationsnetzwerk, das mit der Lade-/Entladevorrichtung verbunden ist, zu empfangen.

10. Detektionssystem (10) für unautorisierte Verbindungen, das detektiert, ob eine Leistungsspeichervorrichtung eine unautorisierte Leistungsspeichervorrichtung ist oder nicht, wobei das Detektionssystem für unautorisierte Verbindungen Folgendes umfasst:
eine Lade-/Entladevorrichtung, die mit Leistung lädt oder entlädt; und
die Detektionsvorrichtung für unautorisierte Verbindungen nach einem der Ansprüche 1 bis 3 und 9, die detektiert, ob eine Leistungsspeichervorrichtung, die mit der Lade-/Entladevorrichtung verbindbar ist, eine unautorisierte Leistungsspeichervorrichtung ist oder nicht.

11. Detektionssystem (10) für unautorisierte Verbindungen, das detektiert, ob eine Lade-/Entladevorrichtung zum Laden oder Entladen mit Leistung eine unautorisierte Lade-/Entladevorrichtung ist oder nicht, wobei das Detektionssystem für unautorisierte Verbindungen Folgendes umfasst:
eine Leistungsspeichervorrichtung und
eine Detektionsvorrichtung für unautorisierte Verbindungen nach einem der Ansprüche 4 bis 9, die detektiert, ob eine Lade-/Entladevorrichtung, die mit der Leistungsspeichervorrichtung verbindbar ist und die Leistungsspeichervorrichtung lädt oder entlädt, eine unautorisierte Lade-/Entladevorrichtung ist oder nicht.

12. Detektionsverfahren für unautorisierte Verbindungen, das von einer Detektionsvorrichtung für unautorisierte Verbindungen zum Detektieren, ob eine Leistungsspeichervorrichtung, die mit einer Lade-/Entladevorrichtung zum Laden oder Entladen mit Leistung verbindbar ist, eine unautorisierte Leistungsspeichervorrichtung ist oder nicht, eingesetzt wird, wobei das Detektionsverfahren für unautorisierte Verbindungen Folgendes umfasst:
Empfangen von ersten Lade-/Entladeinformationen, in denen erste Identifikationsinformationen und erste Verbindungsinformationen miteinander verknüpft sind, durch die Detektionsvorrichtung für unautorisierte Verbindungen, wobei die ersten Identifikationsinformationen Informationen zum Identifizieren eines Verschlüsselungsschlüssels der Leistungsspeichervorrichtung sind, der für das gegenseitige Authentifizieren zwischen der Lade-/Entladevorrichtung und der Leistungsspeichervorrichtung, die mit der Lade-/Entladevorrichtung verbindbar ist, verwendet wird, und wobei die ersten Verbindungsinformationen Informationen zur Leistungsspeichervorrichtung sind und erhalten werden, wenn die Leistungsspeichervorrichtung mit der Lade-/Entladevorrichtung verbunden wird; und
Bestimmen unter Verwendung der ersten Identifikationsinformationen und der ersten Verbindungsinformationen, die in den empfangenen ersten Lade-/Entladeinformationen beinhaltet sind, durch Lesen der ersten Lade-/Entladeinformationen (143), die in einer Speichereinheit (140) gespeichert sind, durch eine Steuereinheit (130), ob zwei oder mehr Leistungsspeichervorrichtungen, die mit einem einzelnen ersten Identifikationsinformationselement verknüpft sind, vorhanden sind oder nicht, und
Detektieren, durch die Detektionsvorrichtung für unautorisierte Verbindungen, dass die Leistungsspeichervorrichtung, die mit der Lade-/Entladevorrichtung verbunden ist, die unautorisierte Leistungsspeichervorrichtung ist, wenn bestimmt wird, dass die zwei oder mehr Leistungsspeichervorrichtungen, die mit dem einzelnen ersten Identifikationsinformationselement verknüpft sind, vorhanden sind.

13. Detektionsverfahren für unautorisierte Verbindungen, das von einer Detektionsvorrichtung für unautorisierte Verbindungen zum Detektieren, ob eine Lade-/Entladevorrichtung, die mit einer Leistungsspeichervorrichtung verbindbar ist und die Leistungsspeichervorrichtung lädt oder entlädt, eine unautorisierte Lade-/Entladevorrichtung ist oder nicht, wobei die Detektionsvorrichtung für unautorisierte Verbindungen Folgendes umfasst:
Empfangen von zweiten Lade-/Entladeinformationen durch die Detektionsvorrichtung für unautorisierte Verbindungen, in denen zweite Identifikationsinformationen und zweite Verbindungsinformationen miteinander verknüpft sind, wobei die zweiten Identifikationsinformationen Informationen zum Identifizieren eines Verschlüsselungsschlüssels der Lade-/Entladevorrichtung sind, der zum gegenseitigen Authentifizieren zwischen der Leistungsspeichervorrichtung und der Lade-/Entladevorrichtung, die mit der Leistungsspeichervorrichtung verbindbar ist, verwendet wird, und die zweiten Verbindungsinformationen Informationen zur Lade-/Entladevorrichtung sind und erhalten werden, wenn die Lade-/Entladevorrichtung mit der Leistungsspeichervorrichtung verbunden wird; und
Bestimmen unter Verwendung der zweiten Identifikationsinformationen und der zweiten Verbindungsinformationen, die in den empfangenen zweiten Lade-/Entladeinformationen beinhaltet sind, durch Lesen der zweiten Lade-/Entladeinformationen (143), die in einer Speichereinheit (140) gespeichert sind, durch eine Steuereinheit (130), ob zwei oder mehr Lade-/Entladevorrichtungen, die mit einem einzelnen zweiten Identifikationsinformationselement verknüpft sind, vorhanden sind oder nicht, und Detektieren, dass die Lade-/Entladevorrichtung (200), die mit der Leistungsspeichervorrichtung verbunden ist, die unautorisierte Lade-/Entladevorrichtung ist, wenn bestimmt wird, dass die zwei oder mehr Lade-/Entladevorrichtungen, die mit einem einzelnen zweiten Identifikationsinformationselement verknüpft sind, vorhanden sind.

14. Programm, das einen Computer veranlasst, die Schritte, die im Detektionsverfahren nach einem der Ansprüche 12 und 13 für unautorisierte Verbindungen beinhaltet sind, auszuführen.

15. Computerlesbares Aufzeichnungsmedium, das das Programm nach Anspruch 14 aufzeichnet.

16. Integrierte Schaltung, die detektiert, ob eine Leistungsspeichervorrichtung, die zum Laden oder Entladen mit Leistung mit einer Lade-/Entladevorrichtung verbindbar ist, eine unautorisierte Leistungsspeichervorrichtung ist, wobei die integrierte Schaltung Folgendes umfasst:
die Detektionsvorrichtung für unautorisierte Verbindungen nach Anspruch 1.

17. Integrierte Schaltung, die detektiert, ob eine Lade-/Entladevorrichtung, die mit einer Leistungsspeichervorrichtung verbindbar ist und die Leistungsspeichervorrichtung lädt oder entlädt, eine unautorisierte Lade-/Entladevorrichtung ist oder nicht, wobei die integrierte Schaltung Folgendes umfasst:
die Detektionsvorrichtung für unautorisierte Verbindungen nach Anspruch 4.

## Revendications

1. Dispositif de détection de connexion non autorisée (100) qui détecte si un dispositif de stockage d'énergie (300) qui peut être connecté à un dispositif de charge/décharge (200) pour une charge ou une décharge en énergie est un dispositif de stockage d'énergie non autorisé ou non, le dispositif de détection de connexion non autorisée (100) comprenant :
une unité de communication (110) configurée pour recevoir des premières informations de charge/décharge (143) où des premières informations d'identification et des premières informations de connexion sont associées entre elles,
les premières informations d'identification étant des informations pour identifier une clé de cryptage du dispositif de stockage d'énergie (300) utilisée pour une authentification mutuelle entre le dispositif de charge/décharge (200) et le dispositif de stockage d'énergie (300) pouvant être connecté au dispositif de charge/décharge (200),
et les premières informations de connexion étant des informations sur le dispositif de stockage d'énergie (300) et étant obtenues lorsque le dispositif de stockage d'énergie (300) est connecté au dispositif de charge/décharge (200) ;
une unité de commande (130) ;
une unité de stockage (140) ; et
une unité de détection de non-autorisation (120) configurée pour déterminer, en utilisant les premières informations d'identification et les premières informations de connexion incluses dans les premières informations de charge/décharge reçues, si deux dispositifs de stockage d'énergie ou plus associés à un seul élément de premières informations d'identification sont présents ou non en lisant à travers l'unité de commande (130) les premières informations de charge/décharge (143) stockées dans l'unité de stockage (140), et détecter que le dispositif de stockage d'énergie (300) connecté au dispositif de charge/décharge (200) est le dispositif de stockage d'énergie non autorisé s'il est déterminé que les deux dispositifs de stockage d'énergie ou plus associés au seul élément de premières informations d'identification sont présents.

2. Dispositif de détection de connexion non autorisée (100) selon la revendication 1,
dans lequel l'unité de communication (110) est configurée pour recevoir les premières informations de charge/décharge (273) où les premières informations d'identification et les premières informations de connexion sont associées entre elles, les premières informations de connexion comportent des informations indiquant une durée pendant laquelle et une position où le dispositif de stockage d'énergie a été chargé ou déchargé, et
l'unité de détection de non-autorisation (120) est configurée pour détecter si le dispositif de stockage d'énergie (300) connecté au dispositif de charge/décharge (200) est le dispositif de stockage d'énergie non autorisé ou non, en déterminant, sur la base d'une relation entre des durées et des positions incluses dans un élément de premières informations d'identification associé à un seul élément de premières informations d'identification, si deux dispositifs de stockage d'énergie ou plus associés au seul élément de premières informations d'identification sont présents ou non, l'élément de premières informations d'identification étant inclus dans les premières informations de connexion, et l'élément de premières informations d'identification et le seul élément de premières informations d'identification étant inclus dans les premières informations de charge/décharge reçues.

3. Dispositif de détection de connexion non autorisée (100) selon la revendication 2,
dans lequel l'unité de communication (110) est configurée pour recevoir les premières informations de charge/décharge (273) où les premières informations d'identification, informations de durée, et informations de position sont associées entre elles, les informations de durée indiquent une durée pendant laquelle le dispositif de charge/décharge (200) a chargé ou déchargé le dispositif de stockage d'énergie (300), et les informations de position indiquent une position où se trouvait le dispositif de charge/décharge (200).

4. Dispositif de détection de connexion non autorisée (100) qui détecte si un dispositif de charge/décharge (200) qui peut être connecté à un dispositif de stockage d'énergie (300) et qui charge ou décharge le dispositif de stockage d'énergie (300) est un dispositif de charge/décharge non autorisé ou non, le dispositif de détection de connexion non autorisée (100) comprenant :
une unité de communication (110) configurée pour recevoir des deuxièmes informations de charge/décharge où des deuxièmes informations d'identification et des deuxièmes informations de connexion sont associées entre elles, les deuxièmes informations d'identification étant des informations pour identifier une clé de cryptage du dispositif de charge/décharge utilisée pour une authentification mutuelle entre le dispositif de stockage d'énergie et le dispositif de charge/décharge pouvant être connecté au dispositif de stockage d'énergie, et les deuxièmes informations de connexion étant des informations sur le dispositif de charge/décharge et étant obtenues lorsque le dispositif de charge/décharge est connecté au dispositif de stockage d'énergie ;
une unité de commande (130) ;
une unité de stockage (140) ; et
une unité de détection de non-autorisation (120) configurée pour déterminer, en utilisant les deuxièmes informations d'identification et les deuxièmes informations de connexion incluses dans les deuxièmes informations de charge/décharge reçues, si deux dispositifs de charge/décharge ou plus associés à un seul élément de deuxièmes informations d'identification sont présents ou non en lisant à travers l'unité de commande (130) les deuxièmes informations de charge/décharge (143) stockées dans l'unité de stockage (140), et détecter que le dispositif de charge/décharge (200) connecté au dispositif de stockage d'énergie est le dispositif de charge/décharge non autorisé, s'il est déterminé que les deux dispositifs de charge/décharge ou plus associés à un seul élément de deuxièmes informations d'identification sont présents.

5. Dispositif de détection de connexion non autorisée (100) selon la revendication 4,
dans lequel l'unité de communication (110) est configurée pour recevoir les deuxièmes informations de charge/décharge où les deuxièmes informations d'identification et les deuxièmes informations de connexion sont associées entre elles, les deuxièmes informations de connexion comportent des informations d'identification de dispositif de charge/décharge identifiant le dispositif de charge/décharge, et
l'unité de détection de non-autorisation (120) est configurée pour détecter si le dispositif de charge/décharge connecté au dispositif de stockage d'énergie est le dispositif de charge/décharge non autorisé ou non, en déterminant si deux éléments d'informations d'identification de dispositif de charge/décharge ou plus, inclus dans un élément de deuxièmes informations de connexion associé à un seul élément de deuxièmes informations d'identification, indiquent ou non des dispositifs de charge/décharge mutuellement différents, déterminant ainsi si deux dispositifs de charge/décharge ou plus associés au seul élément de deuxièmes informations d'identification sont présents ou non, les deux éléments d'informations d'identification de dispositif de charge/décharge ou plus étant inclus dans les informations d'identification de dispositif de charge/décharge, l'élément de deuxièmes informations de connexion étant inclus dans les deuxièmes informations de connexion, et l'élément de deuxièmes informations de connexion et le deuxième seul élément d'identification étant inclus dans les deuxièmes informations de charge/décharge reçues.

6. Dispositif de détection de connexion non autorisée (100) selon la revendication 5,
dans lequel l'unité de communication (110) est configurée pour recevoir les deuxièmes informations de charge/décharge où les deuxièmes informations d'identification et les deuxièmes informations de connexion sont associées entre elles, les deuxièmes informations de connexion comportent, comme informations d'identification de dispositif de charge/décharge, des informations de position indiquant une position du dispositif de charge/décharge, et l'unité de détection de non-autorisation (120) est configurée pour détecter si le dispositif de charge/décharge (200) connecté au dispositif de stockage d'énergie (300) est le dispositif de charge/décharge non autorisé ou non, en déterminant si deux éléments d'informations de position ou plus, inclus dans un élément de deuxièmes informations de connexion associé à un seul élément de deuxièmes informations d'identification, indiquent ou non des positions mutuellement différentes, déterminant ainsi si deux dispositifs de charge/décharge ou plus associés au seul élément de deuxièmes informations d'identification sont présents ou non, les deux éléments d'informations de position ou plus étant inclus dans les informations de position, l'élément de deuxièmes informations de connexion étant inclus dans les deuxièmes informations de connexion, et l'élément de deuxièmes informations de connexion et le seul élément de deuxièmes informations d'identification étant inclus dans les deuxièmes informations de charge/décharge reçues.

7. Dispositif de détection de connexion non autorisée (100) selon la revendication 5,
dans lequel l'unité de communication (110), est configurée pour recevoir les deuxièmes informations de charge/décharge où les deuxièmes informations d'identification et les deuxièmes informations de connexion sont associées entre elles, les deuxièmes informations de connexion comportent des informations de courant continu indiquant, comme informations d'identification de dispositif de charge/décharge , une fluctuation d'un courant continu fourni par le dispositif de charge/décharge, et
l'unité de détection de non-autorisation (120) est configurée pour détecter si le dispositif de charge/décharge connecté au dispositif de stockage d'énergie est le dispositif de charge/décharge non autorisé ou non, en déterminant si deux éléments d'informations de courant continu ou plus, inclus dans un élément de deuxièmes informations de connexion associé à un seul élément de deuxièmes informations d'identification, indiquent ou non des fluctuations mutuellement différentes, déterminant ainsi si deux dispositifs de charge/décharge ou plus associés au seul élément de deuxièmes informations d'identification sont présents, les deux éléments d'informations de courant continu ou plus étant inclus dans les informations de courant continu, l'élément de deuxièmes informations de connexion étant inclus dans les deuxièmes informations de connexion, et l'élément de deuxièmes informations de connexion et le seul élément de deuxièmes informations d'identification étant inclus dans les deuxièmes informations de charge/décharge reçues.

8. Dispositif de détection de connexion non autorisée (100) selon l'une quelconque des revendications 4 à 7,
dans lequel l'unité de communication (110) est configurée pour recevoir les deuxièmes informations de charge/décharge où les deuxièmes informations d'identification et les deuxièmes informations de connexion sont associées entre elles, les deuxièmes informations de connexion comportent les informations d'identification de dispositif de stockage d'énergie identifiant le dispositif de stockage d'énergie connecté au dispositif de charge/décharge, et l'unité de détection de non-autorisation (120) est configurée pour détecter si le dispositif de charge/décharge (200) connecté au dispositif de stockage d'énergie (300) est le dispositif de charge/décharge non autorisé ou non, en déterminant si le nombre de dispositifs de stockage d'énergie, identifiés par deux éléments d'informations d'identification de dispositif de stockage d'énergie ou plus inclus dans un élément de deuxièmes informations de connexion associé à un seul élément de deuxièmes informations d'identification, est supérieur ou égal à un seuil prédéterminé ou non, déterminant ainsi si deux dispositifs de charge/décharge ou plus associés au seul élément de deuxièmes informations d'identification sont présents ou non, les deux éléments d'informations d'identification de dispositif de stockage d'énergie ou plus étant inclus dans les informations d'identification de dispositif de stockage d'énergie, l'élément de deuxièmes informations de connexion étant inclus dans les deuxièmes informations de connexion, et l'élément de deuxièmes informations de connexion et le seul élément de deuxièmes informations d'identification étant inclus dans les deuxièmes informations de charge/décharge reçues.

9. Dispositif de détection de connexion non autorisée (100) selon l'une quelconque des revendications 1 à 8,
dans lequel l'unité de communication (110) est configurée pour recevoir des informations via l'un parmi un réseau de communication connecté à une station de charge pour charger le dispositif de stockage d'énergie lorsque le dispositif de stockage d'énergie est connecté et un réseau de communication connecté au dispositif de charge/décharge.

10. Système de détection de connexion non autorisée (10) qui détecte si un dispositif de stockage d'énergie est un dispositif de stockage d'énergie non autorisé ou non, le système de détection de connexion non autorisée comprenant :
un dispositif de charge/décharge qui effectue une charge ou une décharge en énergie ; et
le dispositif de détection de connexion non autorisée selon l'une quelconque des revendications 1 à 3 et 9 qui détecte si un dispositif de stockage d'énergie qui peut être connecté au dispositif de charge/décharge est un dispositif de stockage d'énergie non autorisé ou non.

11. Système de détection de connexion non autorisée (10) qui détecte si un dispositif de charge/décharge pour une charge ou une décharge en énergie est un dispositif de charge/décharge non autorisé ou non, le système de détection de connexion non autorisée comprenant :
un dispositif de stockage d'énergie ; et
un dispositif de détection de connexion non autorisée selon l'une quelconque des revendications 4 à 9 qui détecte si un dispositif de charge/décharge qui peut être connecté au dispositif de stockage d'énergie et qui charge ou décharge le dispositif de stockage d'énergie est un dispositif de charge/décharge non autorisé ou non.

12. Procédé de détection de connexion non autorisée employé par un dispositif de détection de connexion non autorisée pour détecter si un dispositif de stockage d'énergie qui peut être connecté à un dispositif de charge/décharge pour une charge ou une décharge en énergie est un dispositif de stockage d'énergie non autorisé ou non, le procédé de détection de connexion non autorisée comprenant les étapes consistant à :
recevoir par le dispositif de détection de connexion non autorisée des premières informations de charge/décharge où des premières informations d'identification et des premières informations de connexion sont associées entre elles, les premières informations d'identification étant des informations pour identifier une clé de cryptage du dispositif de stockage d'énergie utilisée pour une authentification mutuelle entre le dispositif de charge/décharge et le dispositif de stockage d'énergie pouvant être connecté au dispositif de charge/décharge, et les premières informations de connexion étant des informations sur le dispositif de stockage d'énergie et étant obtenues lorsque le dispositif de stockage d'énergie est connecté au dispositif de charge/décharge ; et
déterminer, en utilisant les premières informations d'identification et les premières informations de connexion incluses dans les premières informations de charge/décharge reçues, si deux dispositifs de stockage d'énergie ou plus associés à un seul élément de premières informations d'identification sont présents ou non en lisant à travers une unité de commande (130) les premières informations de charge/décharge (143) stockées dans une unité de stockage (140), et
détecter par le dispositif de détection de connexion non autorisée que le dispositif de stockage d'énergie connecté au dispositif de charge/décharge est le dispositif de stockage d'énergie non autorisé s'il est déterminé que les deux dispositifs de stockage d'énergie ou plus associés au seul élément de premières informations d'identification sont présents.

13. Procédé de détection de connexion non autorisée employé par un dispositif de détection de connexion non autorisée pour détecter si un dispositif de charge/décharge qui peut être connecté à un dispositif de stockage d'énergie et qui charge ou décharge le dispositif de stockage d'énergie est un dispositif de charge/décharge non autorisé ou non, le dispositif de détection de connexion non autorisée comprenant les étapes consistant à :
recevoir par le dispositif de détection de connexion non autorisée des deuxièmes informations de charge/décharge où des deuxièmes informations d'identification et des deuxièmes informations de connexion sont associées entre elles, les deuxièmes informations d'identification étant des informations pour identifier une clé de cryptage du dispositif de charge/décharge utilisée pour une authentification mutuelle entre le dispositif de stockage d'énergie et le dispositif de charge/décharge pouvant être connecté au dispositif de stockage d'énergie, et les deuxièmes informations de connexion étant des informations sur le dispositif de charge/décharge et étant obtenues lorsque le dispositif de charge/décharge est connecté au dispositif de stockage d'énergie ; et
déterminer, en utilisant les deuxièmes informations d'identification et les deuxièmes informations de connexion incluses dans les deuxièmes informations de charge/décharge reçues, si deux dispositifs de charge/décharge ou plus associés à un seul élément de deuxièmes informations d'identification sont présents ou non en lisant à travers une unité de commande (130) les deuxièmes informations de charge/décharge (143) stockées dans une unité de stockage (140), et
détecter que le dispositif de charge/décharge (200) connecté au dispositif de stockage d'énergie est le dispositif de charge/décharge non autorisé, s'il est déterminé que les deux dispositifs de charge/décharge ou plus associés à un seul élément de deuxièmes informations d'identification sont présents.

14. Programme qui amène un ordinateur à exécuter les étapes incluses dans le procédé de détection de connexion non autorisée selon l'une des revendications 12 et 13.

15. Support d'enregistrement lisible par ordinateur qui enregistre le programme selon la revendication 14.

16. Circuit intégré qui détecte si un dispositif de stockage d'énergie qui peut être connecté à un dispositif de charge/décharge pour une charge ou une décharge en énergie est un dispositif de stockage d'énergie non autorisé ou non, le circuit intégré comprenant :
le dispositif de détection de connexion non autorisée de la revendication 1.

17. Circuit intégré qui détecte si un dispositif de charge/décharge qui peut être connecté à un dispositif de stockage d'énergie et qui charge ou décharge le dispositif de stockage d'énergie est un dispositif de charge/décharge non autorisé ou non, le circuit intégré comprenant :
le dispositif de détection de connexion non autorisée de la revendication 4.
